(19) **Europäisches Patentamt**
**European Patent Office**
**Office européen des brevets**

(11) **EP 1 791 922 B1**

(12) **EUROPÄISCHE PATENTSCHRIFT**

(45) Veröffentlichungstag und Bekanntmachung des Hinweises auf die Patenterteilung:
**10.12.2008 Patentblatt 2008/50**

(21) Anmeldenummer: **05784719.6**

(22) Anmeldetag: **09.09.2005**

(51) Int Cl.:
*C09J 7/00* (2006.01)  *C09J 11/06* (2006.01)
*C08G 18/62* (2006.01)  *C08G 18/08* (2006.01)
*B05D 1/28* (2006.01)  *B05D 1/26* (2006.01)
*B05D 5/10* (2006.01)

(86) Internationale Anmeldenummer:
**PCT/EP2005/054506**

(87) Internationale Veröffentlichungsnummer:
**WO 2006/027387 (16.03.2006 Gazette 2006/11)**

(54) **VERFAHREN ZUR HERSTELLUNG EINES KLEBEBANDES MIT THERMISCH VERNETZTER ACRYLATSCHMELZKLEBER-SCHICHT**

METHOD FOR PRODUCING AN ADHESIVE STRIP COMPRISING A THERMALLY CROSS-LINKED ACRYLATE HOT-MELT ADHESIVE LAYER

PROCEDE POUR PRODUIRE UNE BANDE ADHESIVE PRESENTANT UNE COUCHE D'ADHESIF FUSIBLE ACRYLATE THERMORETICULE

(84) Benannte Vertragsstaaten:
**DE ES FR GB IT**

(30) Priorität: **09.09.2004 DE 102004044086**

(43) Veröffentlichungstag der Anmeldung:
**06.06.2007 Patentblatt 2007/23**

(73) Patentinhaber: **tesa AG**
**20253 Hamburg (DE)**

(72) Erfinder:
• **ZÖLLNER, Stephan**
**21244 Buchholz/Nordheide (DE)**
• **HANSEN, Sven**
**22765 Hamburg (DE)**
• **BRANDES, Kay**
**21259 Otter (DE)**
• **SPEER, Jörg**
**24616 Brokstedt (DE)**

(56) Entgegenhaltungen:
**EP-A- 1 078 966         EP-A- 1 591 506**
**WO-A-20/04050784      WO-A-20/05059052**
**DE-A1- 10 163 545      US-A- 5 648 425**
**US-A1- 2003 017 332**

## Beschreibung

Die Erfindung betrifft ein Verfahren zur Herstellung eines Klebebandes mit ein- oder beidseitiger vernetzter Acrylatschmelzhaftkleber-Schicht, bei welchem in der Schmelze zu einem Polyacrylatcopolymer ("Polyacrylat") auf Basis von Acrylsäureestern und/oder Methacrylsäureestern ein Vernetzer zugesetzt wird, das mit dem Vernetzer versehene Polyacrylat zu einer Beschichtungseinheit gefördert wird und dort auf eine bahnförmige Schicht eines weiteren Materials aufgebracht wird und nach der Aufbringung homogen vernetzt wird,
dadurch gekennzeichnet, dass

- der Vernetzer ein thermischer Vernetzer ist,
- ein Teil der Acrylsäureester und/oder Methacrylsäureester primäre Hydroxygruppen enthält und

der Vernetzer in zumindest einem kontinuierlich arbeitenden Compoundierungsaggregat zu dem Polyacrylat gegeben wird..

Der technologische Prozess zur Herstellung von Haftklebemassen entwickelt sich immer weiter. In der Industrie sind Heißschmelzverfahren (Hotmeltverfahren) mit lösungsmittelfreier Beschichtungstechnik zur Herstellung von Haftklebemassen von anwachsender Bedeutung. Diese Entwicklung wird durch immer größer werdende Umweltauflagen und steigende Preise für Lösemittel weiter forciert. Daher möchte man Lösungsmittel so weit wie möglich aus dem Fertigungsprozeß für Haftklebebänder eliminieren. Die Einführung der Hotmelt-Technologie stellt wachsende Anforderungen an die Klebemassen. Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen die Acrylathaftklebemassen aber auch hohen Anforderungen im Bereich der Scherfestigkeit gerecht werden. Dies wird durch Polyacrylate mit hohem Molekulargewicht, hoher Polarität und anschließender effizienter Vernetzung erreicht. Eine effiziente Vernetzung wird im einfachsten Fall durch Metall-Chelate erreicht, die bei höheren Temperaturen mit Carbonsäurefunktionen reagieren und somit die Acrylathaftklebemasse vernetzen. Diese Methode ist Stand der Technik für lösungsmittelhaltige Haftklebemassen.

Für Hotmeltprozesse ist die Elektronenstrahlhärtung (ES-Härtung oder ESH) bevorzugt, da hiermit auch größere Schichtdicken vernetzt werden können. Für die Elektronenstrahlhärtung wird keine thermische Energie benötigt, und die Vernetzung verläuft in relativ kurzer Zeit.

Die ersten ES-härtenden Polyacrylat-Hotmelts wurden in der DE 21 31 059 A1 beschrieben. Weitere ES-härtende Hotmelts wurden in der JP 05017726 entwickelt.

Ein allgemeiner Nachteil der ESH ist die Trägerschädigung. Neben der Klebemasse wird auch das Trägermaterial oder das Trennpapier von den Elektronenstrahlen durchdrungen. Dadurch kommt es zu Schädigungen, die sich in Verfärbungen oder in hohen Abrollkräften für das Klebeband bemerkbar machen. Daher besteht der Bedarf für eine den Träger schonende, aber auch effiziente Vernetzungsmethode für Schmelzhaftkleber.

Seit einiger Zeit sind UV-vernetzbare Schmelzhaftkleber kommerziell unter dem Handelsnamen acResin® erhältlich. Diese Massen lassen sich aufgrund ihres relativ niedrigen gewichtsmittleren Molekulargewichts ($M_w$ ca. 200.000 - 300.000 g/mol) sehr gut beschichten und anschließend durch UV-Bestrahlung vernetzen. Nachteilig sind allerdings die Inhomogenität der Vernetzung durch ein Dosisprofil, geringe Effizienz bei harzmodifizierten Acrylatmassen und die Schichtdickenbegrenzung auf deutlich unter 100 μm, die einen Einsatz für wesentliche Bereiche industrieller Klebebänder ausschließen.

Es wird auch vorgeschlagen, reaktive Gruppen zu schützen und sie dann erst nach der Beschichtung durch einen Mechanismus in Gegenwart von Vernetzern wie multifunktionellen Isocyanaten oder Epoxiden freizusetzen und somit die Vernetzung durchzuführen. Als Beispiel für diese Art der Vernetzung, die durch UV-Initienrng mit Hilfe eines Photoacidgenerators durchgeführt wird, ist die Anmeldung EP 1 127 907 A2 genannt. Nachteilig an diesem Verfahren ist die Freisetzung der Schutzgruppe; in diesem konkreten Fall die Freisetzung gasförmigen Isobutens.

Eine direkte thermische Vernetzung von Acrylat-Hotmeltmassen, die NCO-reaktive Gruppen enthalten, wird in EP 0 752 435 A1 beschrieben. Die verwendeten blockierungsmittelfreien Isocyanate, insbesondere sterisch gehinderte und dimerisiertes Isocyanate, benötigen sehr drastische Vernetzungsbedingungen, so dass eine sinnvolle technische Umsetzung nicht möglich ist.
Die in der EP 0 752 435 A1 beschriebene Vorgehensweise führt bei den Bedingungen, wie sie bei eine Verarbeitung aus der Schmelze herrschen, zu einer raschen, relativ weitgehenden Vernetzung, so dass eine Verarbeitung der Masse, insbesondere in Hinblick auf eine Beschichtung von Trägermaterialien, schwierig ist. Insbesondere können keine sehr homogenen Klebstoffschichten erhalten werden, wie sie für viele technische Anwendungen von Klebebändern erforderlich sind.

Weiterhin ist die Verwendung von blockierten Isocyanaten Stand der Technik. Nachteilig an diesem Konzept ist die Freisetzung von Blockierungsgruppen bzw. Fragmenten, die einen negativen Effekt auf die klebtechnischen Eigenschaften haben. Ein Beispiel ist US 4.524.104. Hier werden Acrylatschmelzhaftkleber beschrieben, die mit blok-

kierten Polyisocyanaten zusammen mit Cycloamidinen oder Salzen davon als Katalysator vernetzt werden können. Bei diesem System können zum einen der notwendige Katalysator, vor allem aber das entstehende HCN, Phenol, Caprolactam oder dergleichen die Produkteigenschaften stark beeinträchtigen. Zudem sind auch bei diesem Konzept drastische Bedingungen zur Freisetzung der reaktiven Gruppen benötigen. Ein nennenswerter Produkteinsatz ist bislang nicht bekannt und erscheint zudem unattraktiv.

Aufgabe der Erfindung ist es daher, ein Verfahren zur thermischen Vernetzung von Acrylatschmelzhaftklebern anzubieten. Insbesondere soll das Verfahren zur Herstellung eines Klebebandes, welches mindestens auf einer Seite mit einem thermisch vernetzten Acrylatschmelzhaftkleber ausgerüstet ist, geeignet sein. Dabei wird auf die Möglichkeit zur Herstellung von möglichst gleichmäßigen und homogenen Schichten Wert gelegt.

Das erfindungsgemäße Verfahren soll die Freisetzung von chemischen Verbindungen, die die klebtechnischen Eigenschaften verschlechtern, weitestgehend vermeiden.

Gelöst wird die Aufgabe durch ein Verfahren gemäß Anspruch 1, bei welchem ein lösemittelfreies funktionalisiertes Acrylatcopolymer, welches nach Zudosieren eines thermisch reaktiven Vernetzers eine für das Compoundieren, Fördern und Beschichten ausreichend lange Verarbeitungszeit hat, bevorzugt mittels eines Walzenverfahrens auf eine bahnförmige Schicht eines weiteren Materials, insbesondere ein bandförmiges Trägermaterial oder eine Klebmassenschicht, beschichtet wird und welches nach der Beschichtung unter milden Bedingungen nachvernetzt, bis eine für Haftklebebänder ausreichende Kohäsion erreicht wird.

Entsprechend betrifft die Erfindung ein Verfahren zur Herstellung eines Klebebandes, welches mindestens auf einer Seite mit einem thermisch vernetzten Acrylatschmelzhaftkleber ausgerüstet ist. Bei dem Verfahren wird einem Polyacylatcopolymer (im folgenden einfach als "Polyacrylat" bezeichnet) auf Basis von Acrylsäureestern und/oder Methacrylsäureestern in der Schmelze zumindest ein thermischer Vernetzer zugesetzt, wobei das mit dem Vernetzer versehene Polyacrylat zu einer Beschichtungseinheit gefördert wird, dort auf eine bahnförmige Schicht eines weiteren Materials, insbesondere ein bandförmiges Trägermaterial oder eine Klebmassenschicht, beschichtet wird, und wobei die Vernetzung des Polyacrylats auf der bahnförmigen Schicht des weiteren Materials stattfindet. Erfindungsgemäß enthält ein Teil der Acrylsäureester und/oder Methacrylsäureester primäre Hydroxygruppen. Der Vernetzer wird in zumindest einem kontinuierlich arbeitenden Compoundierungsaggregat zu dem Polyacrylat gegeben. Erfindungsgemäß bevorzugt wird der thermische Vernetzer in einem Extruder zugesetzt.

Als Klebebänder im erfindungsgemäßen Sinne sollen dabei alle ein- oder beidseitig mit Klebmasse beschichteten flächigen Trägergebilde verstanden werden, also neben klassischen Bändern auch Etiketten, Abschnitte, Stanzlinge, zweidimensional ausgedehnte Gebilde und dergleichen.

In einer sehr vorteilhaften Ausführungsform ist der zugesetzte thermische Vernetzer ein Isocyanat, bevorzugt ein trimerisiertes Isocyanat. In besonders bevorzugter Weise sind die trimerisierten Isocyanate aliphatische und/oder mit Aminen deaktivierte Isocyanate.

Geeignete Isocyanate sind insbesondere trimerisierte Derivate von MDI [4,4-Methylendi(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethyl-cyclohexan], beispielsweise die Typen Desmodur® N3600 und XP2410 (jeweils BAYER AG: Aliphatische Polyisocyanate, niedrigviskose HDI-Trimerisate). Auch sehr gut geeignet ist die oberflächendeaktivierte Dispersion von mikronisiertem trimerisiertem IPDI BUEJ 339®, jetzt HF9 ® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyante, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG) wobei diese Aufzählung nicht abschließend ist.

Bei dem Verfahren wird einem Polyacrylatcopolymer (im folgenden einfach als "Polyacrylat" bezeichnet) auf Basis von Acrylsäureestern und/oder Methacrylsäureestern ausgegangen, wobei zumindest ein Teil der Acrylsäureester und/oder Methacrylsäureester primäre Hydroxygruppen enthält. Der Anteil der primäre Hydroxygruppen enthaltenden Acryl- und/oder Methacrylsäureester beträgt in bevorzugter Vorgehensweise bis zu 25 Gew.-%, bezogen auf das Polyacrylat. Es kann außerdem von Vorteil sein, wenn das Polyacrylat zum Teil einpolymerisierte Acrylsäure aufweist.

Für das erfindungsgemäße Verfahren wird insbesondere vorzugsweise ein Polyacrylat eingesetzt, welches auf die folgende Eduktmischung, enthaltend Monomere der folgenden Zusammensetzung, zurückgeführt werden kann:

a1) Acrylsäureester und/oder Methacrylsäureester der folgenden Formel

$$CH_2 = C(R^I)(COOR^{II})$$

wobei R' = H oder $CH_3$ und R" eine Alkylkette mit 1 bis 20 C-Atomen ist, mit einem Anteil von 65 - 99 Gew.-%,
a2) Acrylate und/oder Methacrylate, deren Alkoholkomponente zumindest eine primäre Hydroxyl-Gruppe enthält, und/oder mit Acrylaten copolymerisierbare Vinylverbindungen, die zumindest eine primäre Hydroxyl-Gruppe enthalten, mit einem Anteil von 1 bis 20 Gew.-%,
a3) und, sofern sich die Anteile von a1) und a2) nicht zu 100 Gew.-% addieren, olefinisch ungesättigte Monomere mit funktionellen Gruppen, mit einem Anteil von 0 bis 15 Gew.-%.

Die Monomere werden bevorzugt dermaßen gewählt, dass die resultierenden Polymere bei Raumtemperatur als Haftklebemassen eingesetzt werden können, insbesondere derart, dass die resultierenden Polymere haftklebrige Eigenschaften entsprechend des "Handbook of Pressure Sensitive Adhesive Technology" von Donatas Satas (van Nostrand, New York 1989, Seite 444 - 514) besitzen.

Die Monomere werden bevorzugt dermaßen gewählt, dass die resultierenden Polymere eine Glasübergangstemperatur von $T_G \leq 25\,°C$ aufweisen, im Sinne einer dynamischen Glasübergangstemperatur für amorphe Systeme und der Schmelztemperatur für semikristalline Systeme verstanden, die durch dynamisch mechanische Analyse (DMA) bei geringen Frequenzen bestimmt werden können.

Zur Erzielung einer für Haftklebemassen bevorzugten Glasübergangstemperatur $T_G$ der Polymere von $T_G \leq 25\,°C$ werden entsprechend dem vorstehend gesagten die Monomere sehr bevorzugt derart ausgesucht und die mengenmäßige Zusammensetzung der Monomermischung vorteilhaft derart gewählt, dass sich nach einer Gleichung (G1) in Analogie zur Fox-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

In einer sehr bevorzugten Weise werden für a1) Acryl- oder Methacrylmomonere eingesetzt, die aus Acryl- und Methacrylsäureester mit Alkylgruppen aus 1 bis 20 C-Atomen bestehen, bevorzugt 4 bis 9 C-Atomen umfassen. Spezifische Beispiele, ohne sich durch diese Aufzählung einschränken zu wollen, sind Methacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat. Weitere einzusetzende Verbindungsklassen für a1) sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer sehr bevorzugten Vorgehensweise werden für a2) Monomere eingesetzt, die Hydroxylgruppen, sehr bevorzugt primäre Hydroxylgruppen enthalten. Beispiel für a2) sind Hydroxyethylacrylat, Hydroxyethylmethacrylat, Hydroxypropylacrylat, Hydroxypropylmethacrylat, 6-Hydroxyhexylmethacrylat, 4-Hydroxystyrol, Allylalkohol wobei diese Aufzählung nicht abschließend ist.

Monomere für a3) sind z.B. olefinisch ungesättigte Monomere mit funktionellen Gruppen wie Carboxylsäuregruppen, Säureanhydridgruppen, Phosphonsäuregruppen, Amid- oder Imid- oder Aminogruppen, Isocyanatgruppen, Epoxygruppen oder Thiolgruppen. Beispiele für a3) sind Acrylsäure oder Methacrylsäure, Maleinsäureanhydrid, Itaconsäureanhydrid, Itaconsäure, Glyceridylmethacrylat, Glycerylmethacrylat, Vinylessigsäure, β-Acryloyloxypropionsäure, Trichloracrylsäure, Fumarsäure, Crotonsäure, Aconitsäure, Acrylnitril Dimethylacrylsäure, N,N-Dialkylsubstituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Für die erfindungsgemäße Weiterverarbeitung besonders geeignet sind die Polyacrylate, wenn sie durch Bulk-, Lösungs- oder Emulsionspolymerisation hergestellt werden und gegebenenfalls anschließend, insbesondere falls sie flüchtige Bestandteile einhalten, aufkonzentriert werden.
Die Polyacrylate haben in einer bevorzugten Vorgehensweise ein gewichtsmittleres Molekulargewicht $M_w$ von mindestens 300.000 g/mol bis maximal 1.500.000 g/mol. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS). Die Polyacrylate enthalten mindestens ein Comonomer, welches eine oder mehrere primäre Hydroxygruppen enthält. Es kann notwendig sein, die Polymerisation in Gegenwart von Polymerisationsreglem wie Thiolen, Halogenverbindungen und insbesondere Alkoholen (Isopropanol) durchzuführen, um das gewünschte ein gewichtsmittlere Molekulargewicht $M_w$ einzustellen.

Die Polymerisationszeit beträgt - je nach Umsatz und Temperatur - zwischen 2 und 72 Stunden.

Für das erfindungsgemäße Verfahren besonders geeignet sind auch Polyacrylate, die eine enge Molekulargewichtsverteilung (Polydispersität < 4) haben. Diese Massen sind bei relativ niedrigem Molekulargewicht nach dem Vernetzen besonders scherfest. Da im Vergleich zu einem normal verteilten Polyacrylat bei einem eng verteilten bei gleichem Kohäsionsniveau ein niedrigeres Molekulargewicht erforderlich ist, reduzieren sich Viskosität und Prozesstemperaturen. Somit ermöglicht ein eng verteiltes Polyacrylate eine besonders lange Verarbeitungszeit.

Eng verteilte Polyacrylate können durch anionische Polymerisation oder durch kontrollierte radikalische Polymerisationsmethoden hergestellt werden, wobei letzteres besonders gut geeignet ist. Beispiele sind in US 6,765,078 B2 und DE 10036901 A1 bzw. US 2004/0092685 A1 beschrieben. Auch die Atom Transfer Radical Polymerization (ATRP) läßt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Optional können die üblichen klebrigmachenden Harze dem Polyacrylat in der Schmelze oder noch vor der Aufkonzentration in Lösung zugesetzt werden. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze. Beliebige Kombinationen dieser und weiterer Harze können eingesetzt werden, um die Eigenschaften der resultierenden Klebmasse wunschgemäß einzustellen. Besonders vorteilhaft lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Ein bevorzugtes Terpenphenolharze ist beispielsweise Dertophene T 110, ein bevorzugtes hydriertes Kolophoniumderivat Foral 85.

Optional können auch pulver- und granulatförmige Füllstoffe, Farbstoffe und Pigmente, besonders auch abrasive und verstärkende, wie z.B. Kreiden ($CaCO_3$) Titandioxide, Zinkoxide und Ruße auch zu hohen Anteilen, das heißt von 1 bis 50 Gew.-%, bezogen auf die Gesamtrezeptur, hervorragend in die Polyacrylatschmelze dosiert, homogen eingearbeitet und am 2-Walzenauftragswerk beschichtet werden. Hier versagen oftmals die konventionellen Verfahren aufgrund der dann sehr hohen Viskosität des Gesamtcompounds.

Sehr bevorzugt können verschiedene Kreideformen als Füllstoff eingesetzt werden, wobei besonders bevorzugt Mikrosöhl-Kreide (Fa. Söhlde) eingesetzt wird. Bei bevorzugten Anteilen bis zu 30 Gew% verändern sich die klebtechnischen Eigenschaften (Scherfestigkeit bei RT, Sofortklebkraft auf Stahl und PE) durch den Füllstoffzusatz praktisch nicht.

Weiterhin können schwerentflammbare Füllstoffe, wie beispielsweise Ammoniumpolyphosphat, weiterhin elektrisch leitfähige Füllstoffe, wie beispielsweise Leitruß, Kohlenstofffasern und/oder silberbeschichtete Kugeln, weiterhin ferromagnetische Additive, wie beispielsweise Eisen-(III)-oxide, weiterhin Additive zur Herstellung geschäumter Schichten, wie beispielsweise Blähmittel, Glasvollkugeln, Glashohlkugeln, expandierbare Microballons, Alterungsschutzmitteln, Lichtschutzmitteln, Ozonschutzmitteln vor oder nach der Aufkonzentration des Polyacrylat zugegeben oder eincompoundiert werden.

Optional können die üblichen Weichmacher in Konzentrationen bis zu 5 Gew.-% zugesetzt werden. Als Weichmacher können z.B. niedermolekulare Polyacrylate, Phthalate, wasserlösliche Weichmacher, Weichharze, Phosphate oder Polyphosphate zudosiert werden.

Weiterhin optional kann das thermisch vernetzbare Acrylathotmelt auch mit anderen Polymeren geblendet bzw. abgemischt werden. Hierzu eignen sich Polymere auf Basis von Naturkautschuk, Synthesekautschuk, EVA, Siliconkautschuk, Acrylkautschuk, Polyvinylether.

Hierbei erweist sich als zweckmäßig, diese Polymere in granulierter oder andersartig zerkleinerter Form dem Acrylhotmelt vor Zugabe des thermischen Vernetzers zuzusetzen. Die Herstellung der Polymerblends erfolgt in einem Extruder, bevorzugt in einem Mehrwellenextruder oder in einem Planetwalzenmischer. Zur Stabilisierung der thermisch vernetzten Acrylathotmelts, insbesondere auch der Polymerblends aus thermische vernetzten Acrylathotmelt und anderen Polymeren kann es sinnvoll sein, das ausgeformte Material mit Elektronenbestrahlung geringer Dosen zu bestrahlen. Optional können zu diesem Zweck dem Polycrylat Vemetrungspromotoren wie di-, tri-, oder multifunktionelle Acrylat bzw. Polyester oder Urethanacrylat zugesetzt werden.

Bei dem erfindungsgemäßen Verfahren zur Herstellung von vernetzten Polyacrylaten werden die reaktiven Vernetzer dem zu vernetzenden Polyacrylat unter genauer Temperatur- und Zeitkontrolle zugesetzt wird. Die Masse wird zu einer Beschichtungseinheit gefördert und auf einen Träger übertragen, bevorzugt mittels 2-Walzen, Mehrwalzen- oder Düsenbeschichtung.

Die Zeit nach Zudosierung des Vernetzungssystems im Compoundieraggregat bis zum Ausformen auf einen Träger wird als Verarbeitungszeit bezeichnet. Innerhalb dieser Zeit kann die nun vernetzende Haftklebmasse gelfrei und mit optisch gutem Strichbild beschichtet werden. Die Vernetzung erfolgt dann hauptsächlich nach der Beschichtung auf der Bahn unter milden Bedingungen, die weder Träger noch Liner schädigen.

Die Zugabe des thermischen Vernetzers zu dem Polyacrylat erfolgt in der Schmelze, bevorzugt unter genauer Temperatur- und Zeitkontrolle.

Die Zugabe und Einarbeitung des thermisch reaktiven Vernetzungssystems in die Polyacrylatmatrix erfolgt in kontinuierlich arbeitenden Compoundierungsaggregaten. Diese Aggregate sind erfindungsgemäß so konzipiert, dass bei guter Durchmischung und gleichzeitig geringem Eintrag von Scherenergie eine kurze Verweilzeit der Masse nach der Dosierung des Vernetzungssystems gewährleistet wird. Vorzugweise sind die Compoundierungsaggregate Doppelschnecken- und/oder Planetwalzenextruder. Dabei ist es besonders vorteilhaft, wenn die Spindeln des Extruders temperierbar und/oder kühlbar sind.

Die Zugabe der Vernetzer erfolgt an einer oder an mehreren Stellen der Aggregate, vorzugsweise in druckfreien Zonen. Günstig ist auch, wenn die thermisch reaktiven Vernetzersubstanzen fein verteilt dem Polyacrylat zugesetzt werden, beispielsweise als Aerosol, in feinen Tröpfchen oder verdünnt in einem geeigneten Verdünnungsmittel wie einem polymerverträglichen Weichmacher.

Bevorzugt geht man vor, indem man den thermischen Vernetzer, insbesondere das trimerisierte Isocyanat, zu 0,1 bis 5 Gew.-%, insbesondere zu 0,2 bis 1 Gew.-%, bezogen auf das Polyacrylat, einsetzt.

Bei einer Weiterentwicklung des erfindungsgemäßen Verfahrens beträgt die Temperatur des Polyacrylats bei der Zugabe des thermischen Vernetzers zwischen 60 °C und 120 °C, besonders bevorzugt zwischen 70 °C und 100 °C.

Vorteilhaft beträgt der Restmonomergehalt im Polyacrylat bei Zugabe des thermischen Vernetzers nicht mehr als 1 Gew.-%, insbesondere nicht mehr als 0,3 Gew.-%, bezogen auf das Polyacrylat. Weiter vorteilhaft beträgt der Restlösemittelgehalt im Polyacrylat nach Aufkonzentration und bei Zugabe des thermischen Vernetzers nicht mehr als 1 Gew.-%, insbesondere nicht mehr als 0,3 Gew.-%, bezogen auf das Polyacrylat.

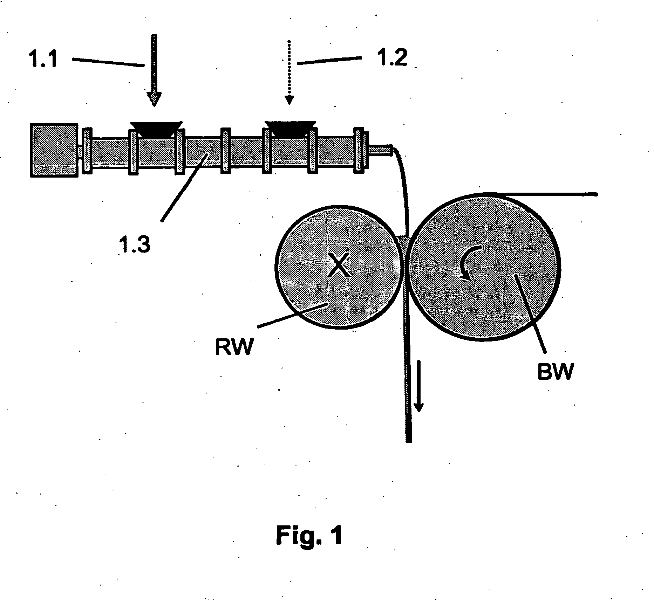

Das mit dem Vernetzer versehene Polyacrylat wird zu einer Beschichtungseinheit gefördert, besonders bevorzugt mit einem Extruder, noch mehr bevorzugt mit dem Compoundierungsextruder, in dem bereits der Vernetzer zugesetzt wurde und in dem ggf. bereits die Aufkonzentration des Polyacrylates stattgefunden hat; vgl. hierzu die schematische Darstellung in Figur 1; dabei bedeuten: 1.1 Polyacrylateingabe, 1.2: Vernetzerzugabe, 1.3: Extruder, RW: Rakelwalze; BW: Beschichtungswalze). Es ist also erfindungsgemäß vorteilhaft, die Aufkonzentration des Polyacrylats, die Vernetzerzugabe und -compoundierung und den Massetransport in einem einzigen Extruder oder in Extruderlinien zu realisieren, so dass man ausgehend von dem lösungsmittelhaltigen Basispolymerisat am Ausgang des Extruders bzw. der Extruderlinie ohne zusätzliche Produktionsschritte die erfindungsgemäße, fertig compoundierte, weitgehend lösungsmittelfreie, harz-, füllstoff- und vernetzerabgemischte Selbstklebemasse erhält und dann der Beschichtung zuführt.

Bei der Beschichtung wird die Polyacrylatmasse auf ein Trägermaterial übertragen, bevorzugt mittels Zweiwalzen-, Mehrwalzen- oder Düsenbeschichtung. Beschichtung heißt in diesem Zusammenhang das Ausformen der mit Vernetzer abgemischten, weitestgehend lösungsmittelfreien Klebmasse in dünne Schichten und Auftragen auf ein bahnförmiges Trägermaterial. Die Verarbeitungszeit beträgt in der Regel 3-30 Minuten, bevorzugt 5-20 Minuten, besonders bevorzugt 5-10 Minuten. Niedrigviskose Systeme werden vorzugsweise mit Düsen, höher viskose mit Mehrwalzenwerken beschichtet.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Gewebe und Gewebefolien und/oder gegebenenfalls Trennpapier verwenden. Diese Aufzählung soll nicht abschließend sein.

Der Träger kann dabei ein Permanentträger (insbesondere zur Herstellung von Trägerbasierten Klebebändern) oder ein Temporärträger (insbesondere zur Herstellung von Transferklebebändem) sein.

Die Beschichtung der Selbstklebemassen erfolgt bevorzugt mit Walzenauftragswerken, auch Beschichtungskalander genannt. Die Beschichtungskalander können vorteilhaft aus zwei, drei, vier oder mehr Walzen bestehen. Vorteilhaft ist zumindest eine der Walzen mit einer anti-adhäsiven Walzenoberfläche versehen, bevorzugt alle Walzen, die mit dem Polyacrylat in Berührung kommen. Es können in günstiger Vorgehensweise alle Walzen des Kalanders anti-adhäsiv ausgerüstet sein. Als anti-adhäsive Walzenoberfläche wird besonders bevorzugt ein Stahl-Keramik-Silikon-Verbundwerkstoff eingesetzt. Derartige Walzenoberflächen sind gegen thermische und mechanische Belastungen resistent.

Im Folgenden werden verschiedene erfinderisch geeignete Ausführungsformen beschrieben. Durch die Angabe der Beschichtungsverfahren soll die Erfindung jedoch nicht unnötig beschränkt werden.

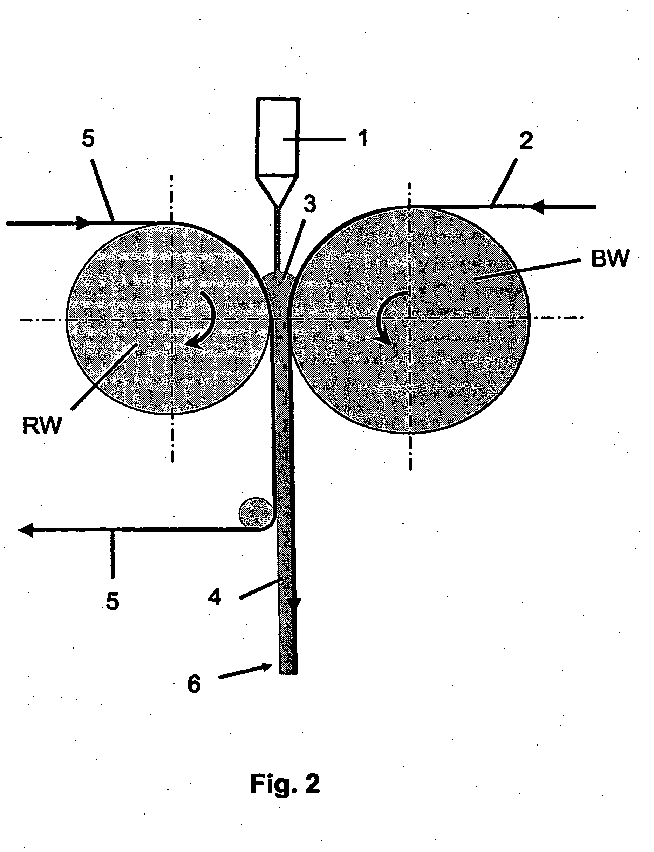

Variante A: Zweiwalzenauftragswerk (Fig. 2)

Ein Zweiwalzenkalander (vgl. Fig. 2) eignet sich insbesondere zur Herstellung von Klebebändern mit Schichtdicken zwischen 5 $\mu$m und 5000 $\mu$m bei niedrigen und moderaten Beschichtungsgeschwindigkeiten von 1 m/min bis 50 m/min.

Die zwei Walzen (W1) und (W2) sind derart angeordnet, dass sie einen Spalt bilden, in welchen die Selbstklebemasse (3) beispielsweise mittels einer Verteilerdüse (1) eingebracht wird. Die erste Walze (BW) ["Beschichtungswalze"] führt den Träger (2), auf den die Selbstklebemasse (3) beschichtet werden soll. Die zweite Walze (RW) ["Rakelwalze"] führt einen antiadhäsiv ausgerüsteten Hilfsträger (5) und presst mittels des Hilfsträgers auf die Klebemasse, so dass diese auf den Träger (2) als Schicht (4) abgelegt wird. Es wird der antiadhäsiv ausgerüstete Hilfsträger (5) von der Selbstklebemassenschicht (4) wieder abgenommen, und das Klebeband (6) bestehend aus der Klebemassenschicht (4) auf dem Träger (2) wird aus der Beschichtungsanlage herausgeführt.

Bei Schichtdicken bis ca. 500 $\mu$m kann auf den antiadhäsiv ausgerüsteten Hilfsträger (5) verzichtet werden, so dass die Klebmasse (3) direkten Kontakt zur Rakelwalze (RW) hat. Als Materialien für den Träger (2) können nahezu alle in der Klebebandherstellung bekannten Trägermaterialien verwendet werden, so zum Beispiel thermoplastische Folien PE, PP, PET, Papiere, Gewebe, auch Trennfolien und andere antiadhäsive ausgerüstete Trägertypen. Die Oberflächentemperaturen der Walzen werden zwischen 25 °C und 200 °C, bevorzugt zwischen 60 °C und 150 °C und besonders bevorzugt zwischen 80 °C und 120 °C eingestellt. Als Oberflächen für die beiden verwendeten Kalanderwalzen eignen sich die dem Fachmann geläufigen Materialien wie Stahl, verchromter Stahl, rostfreier Stahl, Kunststoffe, Silikone, Keramiken sowie denkbare Kombinationen aus den genannten Materialien.

Wenn Schichtdicken bis ca. 500 $\mu$m beschichtet werden sollen und auf den Hilfsträger (5) verzichtet wird, ist eine antiadhäsiv ausgerüstete Walzenoberfläche der Rakelwalze (RW) vorteilhaft. Solche eine Walzenoberfläche kann beispielsweise aus dem Material mit der Bezeichnung PALLAS SK-B-012/5 der Fa. PALLAS OBERFLÄCHENTECHNIK GMBH, Deutschland oder aus dem Material mit der Bezeichnung AST 9984-B der Fa. ADVANCED SURFACE TECHNOLOGIES, Deutschland, bestehen. Bei diesen Oberflächen handelt es sich um Metall-Keramik-Silikon-Verbundwerkstoffe, die sich durch gute antiadhäsive Eigenschaften bei gleichzeitig hoher Standfestigkeit unter den gewählten Prozessbedingungen auszeichnen.

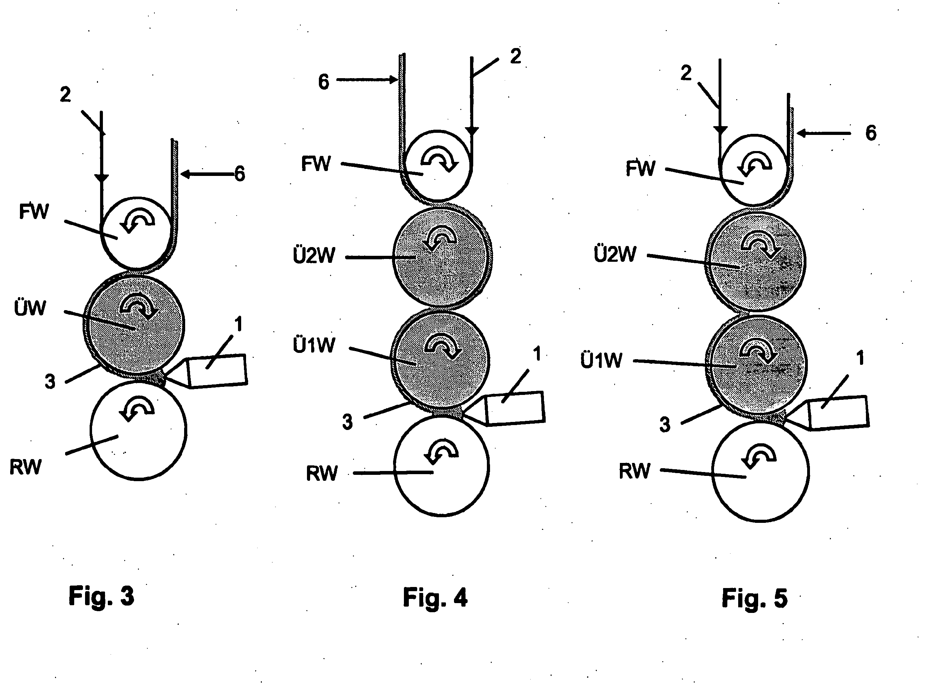

Variante_B:_Dreiwalzenkalander (Fig. 3)

Sehr vorteilhaft lassen sich Mehrwalzensysteme (besonders mit drei Walzen) zur Beschichtung einsetzen. Fig. 3 zeigt das Prinzip des Dreiwalzenauftragswerkes: Über eine Verteilerdüse (1) wird die Klebemasse (3) wiederum in einen durch eine erste Walze (ÜW) ["Überführungswalze"] und eine Rakelwalze (RW) gebildeten Spalt gegeben. Die Selbstklebemasse wird dabei zeitweilig auf der Überführungswalze (ÜW) abgelegt und von dieser zu einer dritten Walze (FW) ["Führungswalze"] geführt, die das Trägermaterial (2) an die Klebmassenschicht heranbringt. Beim Durchlauf durch den zwischen der Überführungswalze (ÜW) und der Führungswalze (BW) gebildeten Spalt wird die Klebmassenschicht (4) von der Oberfläche der Überführungswalze (ÜW) auf das Trägermaterial (2) abgelegt und als Klebeband (6) aus der Beschichtungsanlage herausgeführt.

Die Drehrichtungen der einzelnen Walzen ist in der Figur durch die jeweilige Pfeilrichtung dargestellt.

Für den Fachmann völlig überraschend ist die Tatsache, das die zum Teil stark eigenklebrigen, mit Klebharz abgemischten, lösungsmittelfreien Selbstklebemassen auf Polyacrylatbasis mittels 3-Walzenkalander beschichtet werden können, und zwar erstaunlicherweise auch auf antiadhäsiv ausgerüstete Trägermaterialien wie Trennpapiere und Trennfolien. Zu erwarten gewesen wäre vielmehr, dass die Klebmasse nach dem Veriassen der Verteilerdüse zumindest teilweise auf der Rakelwalze (RW) verbleiben und nicht als homogener Selbstklebemassefilm auf die Überführungswalze (ÜW) übertragen würde. Des weiteren wäre nicht zu vermuten gewesen, dass die auf Überführungswalze (ÜW) ausgeformte Selbstklebemasse mit optisch weitgehend homogenem Beschichtungsbild auf das Trägermaterial übertragen werden kann. Vielmehr wäre zu erwarten gewesen wäre, dass der Klebmassenfilm auf der Überführungswalze (ÜW) verbleiben oder nur unvollständig auf den Träger übergeben würde. Erstaunlicherweise werden stattdessen sogar Klebebänder mit gutem Beschichtungsbild, d.h. mit optisch weitgehend homogener Oberfläche, erzeugt.

Besonders gute Ergebnisse werden durch die Verwendung von Kalanderwalzen erzielt, die mit antiadhäsiven Oberflächen ausgerüstet sind; dies gilt insbesondere vorteilhaft für die Überführungswalze ÜW. Diese Oberflächen tragen in besonders vorteilhafter Weise zu einem Gelingen des Beschichtungsverfahrens bei, da anti-adhäsive Walzenoberflächen die Übertragung der Polyacrylatmasse selbst auf anti-adhäsive Trägeroberflächen ermöglichen. Verschiedene Arten antiadhäsive Oberflächenbeschichtungen können für die Kalanderwalzen verwendet werden. Als besonders geeignet haben sich auch hier zum Beispiel die bereits vorstehend genannten Metall-Keramik-Silikon-Verbundwerkstoffe PALLAS SK-B-012/5 der Fa. PALLAS OBERFLÄCHENTECHNIK GMBH, Deutschland sowie AST 9984-B der Fa. ADVANCED SURFACE TECHNOLOGIES, Deutschland, erwiesen.

Aufgrund der hohen in den Walzenspalten auftretenden Drücken, gegebenenfalls auch Differenzgeschwindigkeiten der Walzen zueinander, erscheinen reine Silikon- oder TEFLON®-Beschichtungen nur bedingt geeignet, da sie entweder mechanisch zerstört werden und/oder mit der Zeit ihre antiadhäsiven Eigenschaften verlieren.

Mit dem beschriebenen 3-Walzenbeschichtungskalander können insbesondere Selbstklebemassen mit Schichtdicken zwischen 5 $\mu$m und 300 $\mu$m auf Trägermaterialien beschichtet werden, bevorzugt mit Schichtdicken zwischen 20$\mu$m

und 250µm und besonders bevorzugt mit Schichtdicken zwischen 50 µm und 200 µm.

Die Beschichtungsgeschwindigkeit, gemeint ist hier die Umfangsgeschwindigkeit der Führungswalze (FW), die damit der Bahngeschwindigkeit des Trägermaterials entspricht, kann vorteilhaft zwischen 1 m/min und 400 m/min, bevorzugt zwischen 10 m/min und 300 m/min eingestellt werden. Die Umfangsgeschwindigkeit der Überführungswalze (ÜW) kann vorteilhaft auf 5 % bis 110 % der Bahngeschwindigkeit eingestellt werden, bevorzugt auf 50 % bis 110 % der Bahngeschwindigkeit und besonders bevorzugt auf 80 % bis 110 % der Bahngeschwindigkeit. Die Umfangsgeschwindigkeit der Rakelwalze (RW) kann vorteilhaft auf 0 m/min ("statischer Andruck") bis auf 5 % der Bahngeschwindigkeit eingestellt werden.

Neben den Walzenumfangsgeschwindigkeiten sind auch die Walzenspalte einzustellen. Gemeint sind hier die Abstände der Rakelwalze (RW) zur Überführungswalze (W2) sowie der Abstand der Überführungswalze (W1) zur Führungswalze (FW). Die Walzenspalte werden bevorzugt so eingestellt, dass die oben beschriebenen Schichtdicken bei den oben beschriebenen Walzenoberflächengeschwindigkeiten erreicht werden.

Die Walzenoberflächentemperaturen werden vorteilhaft auf 40 °C bis 160 °C eingestellt, bevorzugt auf 60 °C bis 140 °C und besonders bevorzugt auf 80 °C bis 120 °C. Dabei können alle drei Walzen des Kalanders auf die gleiche Temperatur eingestellt werden, es können aber auch pro Walze unterschiedliche Oberflächentemperaturen eingestellt werden. Die Walzenoberflächentemperaturen sind jeweils der Beschaffenheit der Walzenoberflächen, der zu beschichtenden Klebmasse und der zu beschichtenden Träger anzupassen.

Es folgt beispielhaft eine Übersicht geeigneter Walzenoberflächen, die sich als besonders vorteilhaft erwiesen haben:
Rakelwalze (RW)

- SK-B-012/5 der Fa. PALLAS OBERFLÄCHENTECHNIK GmbH, Deutschland
- AST 9984-B der Fa. ADVANCED SURFACE TECHNOLOGIES, Deutschland
- verchromter Stahl
- Stahl, Oberflächenrauhigkeit RZ 10 bis RZ 35
- TEFLON®
- Silikon

Überführungswalze (ÜW)

- SK-B-012/5 der Fa. PALLAS OBERFLÄCHENTECHNIK GmbH, Deutschland
- AST 9984-B der Fa. ADVANCED SURFACE TECHNOLOGIES, Deutschland

Führungswalze (FW)

- Silikon-Gummi, 60 bis 80 shore

Variante C: Vierwalzenkalander (Gleich-Gleichlauf) (vgl. Fig. 4)

In Fig. 4 ist eine weitere günstige Beschichtungsanlage dargestellt. Ausgehend von der vorstehend beschriebenen Anlage ist zwischen der ersten Überführungswalze (Ü1W) und der Führungswalze (FW) eine zweite Überführungswalze (Ü2W) vorgesehen. Im Spalt zwischen der ersten Überführungswalze (Ü1W) und der zweiten Überführungswalze (Ü2W) wird die Klebemassenschicht (3) von der ersten Überführungswalze (Ü1W) abgenommen und auf die zweite Überführungswalze (Ü2W) aufgelegt. Von dieser zweiten Überführungswalze wird die Klebmassenschlcht (3) wieder auf das Trägermaterial übertragen, wie es analog beim Dreiwalzenauftragswerk bereits beschrieben wurde.

Die Walzen sind dabei im Gleich-Gleichlauf geschaltet, vergleiche die in der Fig. 4 durch Pfeile angezeigten Drehrichtungen der einzelnen Walzen.

Mit dem beschriebenen Vierwalzenbeschichtungskalander (Gleich-Gleichlauf-Betrieb) können - wie mit dem als Variante B beschriebenen Dreiwalzenverfahren - sehr vorteilhaft Selbstklebemassen mit Schichtdicken zwischen 5 µm und 300 µm auf Trägermaterialien beschichtet werden, bevorzugt mit Schichtdicken zwischen 20 µm und 250 µm und besonders bevorzugt mit Schichtdicken zwischen 50 µm und 200 µm. Diese Kalanderkonfiguration kann insbesondere besonders bevorzugt gewählt werden, wenn Klebmassen mit hoher Viskosität beschichtet werden sollen oder wenn eine besonders glatte Oberflächenstruktur des fertigen Klebebandes gefordert ist.

Die Beschichtungsgeschwindigkeit (wieder im Sinne der Umfangsgeschwindigkeit der Führungswalze (FW) und der Bahngeschwindigkeit) kann vorteilhaft zwischen 0,5 m/min und 400 m/min, bevorzugt zwischen 10 m/min und 300 m/min eingestellt werden.

Die Umfangsgeschwindigkeit der Rakelwalze (RW) kann auch hier vorteilhaft auf 0 m/min bis auf 5 % der Bahngeschwindigkeit eingestellt werden.

Die Umfangsgeschwindigkeit der ersten Überführungswalze (Ü1W) kann bevorzugt auf 5 % bis 80 % der Bahngeschwindigkeit eingestellt werden, mehr bevorzugt auf 10 % bis 50 % der Bahngeschwindigkeit und besonders bevorzugt auf 20 % bis 30 % der Bahngeschwindigkeit.

Die Umfangsgeschwindigkeit der zweiten Überführungswalze (Ü2W) kann bevorzugt auf 10 % bis 110 % der Bahngeschwindigkeit eingestellt werden, mehr bevorzugt auf 50 % bis 110 % der Bahngeschwindigkeit und besonders bevorzugt auf 80 % bis 110 % der Bahngeschwindigkeit.

Die Walzenspalte (jeweils zwischen den Walzen AW und Ü1W, Ü1W und Ü2W bzw. Ü2W und FW) werden wiederum bevorzugt so eingestellt, dass die vorstehend beschriebenen Schichtdicken bei den vorstehend beschriebenen Walzenoberflächengeschwindigkeiten erreicht werden.

Die Walzenoberflächentemperaturen werden vorteilhaft auf 40 °C bis 160 °C eingestellt, bevorzugt auf 60 °C bis 140 °C und besonders bevorzugt auf 80 °C bis 120 °C. Dabei können alle 4 Walzen des Kalanders auf die gleiche Temperatur eingestellt werden, es können aber auch pro Walze unterschiedliche Oberflächentemperaturen eingestellt werden. Die Walzenoberflächentemperaturen sind jeweils der Beschaffenheit der Walzenoberflächen, der zu beschichtenden Klebmasse und der zu beschichtenden Träger anzupassen.

Die Vorteile anti-adhäsiven Walzenoberflächen ergeben sich in analoger Weise wie in der Verfahrens-Variante B.

Es folgt auch hier eine Übersicht der erfindungsgemäß besonders vorteilhaft einsetzbaren Walzenoberflächen, ohne dass die Erfindung durch diese Angabe unnötig eingeschränkt werden soll:

Rakelwalze (RW)

- SK-B-012/5 der Fa. PALLAS OBERFLÄCHENTECHNIK GMBH,Deutschland
- AST 9984-B der Fa. ADVANCED SURFACE TECHNOLOGIES, Deutschland
- verchromter Stahl
- Stahl, Oberflächenrauhigkeit RZ 10 bis RZ 35
- TEFLON®
- Silikon

Erste Überführungswalze (Ü1W)

- AST 9984-B der Fa. ADVANCED SURFACE TECHNOLOGIES, Deutschland

Zweite Überführungswalze (Ü2W)

- SK-B-012/5 der Fa. PALLAS OBERFLÄCHENTECHNIK GMBH,Deutschland

Führungswalze

- Silikon-Gummi, 60 bis 80 shore

Verfahren D: Vierwalzenkalander (Gleich-Gegenlauf) (vgl. Fig. 5)

Die Fig, 5 zeigt einen ebenfalls vorteilhaft einsetzbaren Vierwalzenkalander, der jedoch im Gleich-Gegenlauf betrieben wird. In der Betriebsführung unterscheidet sich die Variante D von der Variante C dadurch, dass die Klebmassenschicht nicht zwischen den Überführungswalze Ü1W und Ü2W hindurchgezogen wird und dabei von der ersten Überführungswalze Ü1W auf die zweite Überführungswalze Ü2G übergeben wird, sondern durch die gleiche Drehrichtung der ersten und der zweiten Überführungswalze erfährt die Klebemasse beim Übergang von der ersten auf die zweiten Überführungswalze eine Richtungsänderung (Gegenlauf), vgl. hierzu die Darstellung in Fig. 5 und insbesondere die dort gezeigten Drehrichtungen der Walzen.

Mit dem hier beschriebenen Vierwalzenbeschichtungskalander können wie mit der in Verfahren C beschriebenen Vierwalzenkalanderkonfiguraiton hervorragend Selbstklebemassen beschichtet werden. Diese Kalanderkonfiguration zeichnet sich dadurch aus, dass die zweite Überführungswalze Ü2W eine der ersten Überführungswalze Ü1W entgegengesetzte Drehrichtung am Walzenspalt zwischen diesen beiden Walzen aufweist. Dadurch ist es möglich, Klebebänder mit hohen Schichtdicken zwischen 100 $\mu$m und 1000 $\mu$m herzustellen, bevorzugt mit Schichtdicken zwischen 200 $\mu$m und 800 $\mu$m und besonders bevorzugt mit Schichtdicken zwischen 300 $\mu$m und 600 $\mu$m.

Die Beschichtungsgeschwindigkeit, gemeint ist wiederum die Umfangsgeschwindigkeit der Führungswalze FW, kann vorteilhaft zwischen 0,5 m/min und 400 m/min, bevorzugt zwischen 10 m/min und 300 m/min eingestellt werden.

Die Umfangsgeschwindigkeit der Rakelwalze AW kann vorteilhaft auf 0 m/min bis auf 5 % der Bahngeschwindigkeit eingestellt werden.

Die Umfangsgeschwindigkeit der ersten Überführungswalze Ü1W kann vorteilhaft auf 5 % bis 130 % der Bahngeschwindigkeit eingestellt werden, bevorzugt auf 10 % bis 50 % der Bahngeschwindigkeit und besonders bevorzugt auf 20 % bis 30 % der Bahngeschwindigkeit.

Die Umfangsgeschwindigkeit der zweiten Überführungswalze Ü2W kann vorteilhaft auf 10 % bis 110 % der Bahngeschwindigkeit eingestellt werden, bevorzugt auf 50 % bis 110 % der Bahngeschwindigkeit und besonders bevorzugt auf 80 % bis 110 % der Bahngeschwindigkeit.

Auch bei dieser Variante werden die Walzenspalte werden eingestellt, dass die oben beschriebenen Schichtdicken bei den oben beschriebenen Walzenoberflächengeschwindigkeiten erreicht werden.

Die Walzenoberflächentemperaturen werden erfindungsgemäß günstig auf 40 °C bis 160 °C eingestellt, bevorzugt auf 60 °C bis 140 °C und besonders bevorzugt auf 80 °C bis 120 °C. Dabei können alle 4 Walzen des Kalanders auf die gleiche Temperatur eingestellt werden, es können aber auch pro Walze unterschiedliche Oberflächentemperaturen eingestellt werden. Die Walzenoberflächentemperaturen sind jeweils der Beschaffenheit der Walzenoberflächen, der zu beschichtenden Klebmasse und der zu beschichtenden Träger anzupassen.

Für diese Variante D wird ebenfalls eine Übersicht der eingesetzten Walzenoberflächen gegeben, ohne sich unnötig den erfinderischen Gegenstand beschränken zu wollen:

Rakelwalze AW

- SK-B-012/5 der Fa. PALLAS OBERFLÄCHENTECHNIK GMBH,Deutschland
- AST 9984-B der Fa. ADVANCED SURFACE TECHNOLOGIES, Deutschland
- verchromter Stahl
- Stahl, Oberflächenrauhigkeit RZ 10 bis RZ 35
- TEFLON®
- Silikon

Überführungswalze Ü1W

- AST 9984-B der Fa ADVANCED SURFACE TECHNOLOGIES, Deutschland

Überführungswalze Ü2W

- SK-B-012/5 der Fa. PALLAS OBERFLÄCHENTECHNIK GMBH,Deutschland

Führungswalze FW

- Silikon-Gummi, 60 bis 80 shore

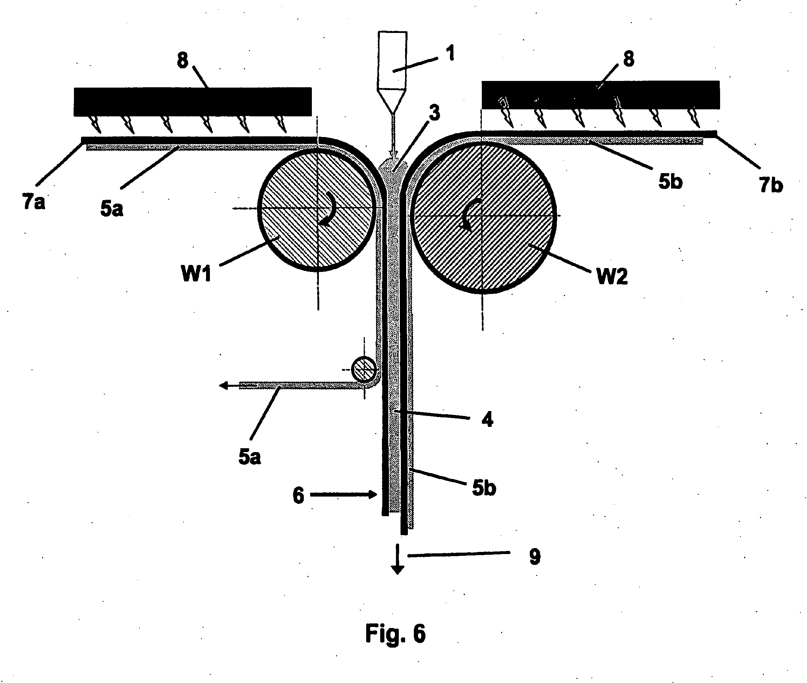

Variante E: Zweiwalzenverfahren für Mehrschichtorodukte (Fig. 6)

Die Fig. 6 zeigt eine Verfahrensführung, die insbesondere vorteilhaft zur Herstellung von dreischichtigen Klebebändern eingesetzt wird, bei welcher die thermisch vernetzende Acrylatmasse den Träger des Klebebandes bildet. Der Aufbau des Dreischichtensystems Klebemasse-Polyacrylatträger-Klebemasse erfolgt bevorzugt über eine Zweiwalzenanlage Mittels einer Verteilerdüse (1) oder einer anderen geeigneten Einheit wird die mit dem Vernetzer und ggf. mit Füllstoffen fertig compoundierte viskoelastische Masse (3), die das spätere Trägermaterial bildet, dem Walzenspalt zugeführt und dort zwischen die beiden Klebmassenschichten (7a, 7b), die zuvor einer Vorbehandlung, insbesondere einer Corona-Behandlung (8) unterzogen wurden, eingebracht. Die insbesondere auf anti-adhäsiv ausgerüstete Hilfsträger (5a, 5b) beschichteten Klebemassen werden dabei über die Walzen W1 und W2 in die Apparatur eingebracht, und zwar derart, dass die Klebmassenseiten einander zugewandt sind.

Die Ausformung der viskoelastischen Masse zu einem viskoelastischen Film erfolgt zwischen den Kalanderwalzen W1 und W2 im Walzenspalt, dabei kommt es gleichzeitig zur Beschichtung mit den beiden zugeführten Selbstklebemassen (7a, 7b). Die Vorbehandlung der Klebemassen, insbesondere innerhalb einer Corona-Station (8), dient der besseren Verankerung der Klebemassen auf der ausgeformten, viskoelastischen Trägerschicht. Durch diese Behandlung entstehen aktive OH-Gruppen an der Oberfläche der Selbstklebemassen, die nach der Herstellung des Dreischichtverbundes zu einer verbesserten chemischen Anbindung an die viskoelastische Trägerschicht führen.

Durch die Breite des Walzenspalts und den Druck der Walzen wird dabei die Schichtdicke des Trägers bestimmt.

Das vorstehend dargestellte Verfahren eignet sich insbesondere zur Herstellung von viskoelastischen Dreischichtaufbauten mit Schichtdicken zwischen 100 $\mu$m und 10.000 $\mu$m, bevorzugt zwischen 300 $\mu$m und 5.000 $\mu$m, mit Herstellgeschwindigkeiten zwischen 0,5 m/min und 100 m/min.

Die Oberflächentemperaturen der Walzen werden abhängig von den verwendeten viskoelastischen Massen und anti-adhäsiven Trägermaterialen bevorzugt zwischen 25 °C und 200 °C, mehr bevorzugt zwischen 60 °C und 150 °C und besonders bevorzugt zwischen 80 °C und 120 °C eingestellt. Als Oberflächen für die beiden verwendeten Kalanderwalzen eignen sich alle dem Fachmann geläufigen Materialien wie Stahl, verchromter Stahl, rostfreier Stahl, Kunststoffe, Silikone, Keramiken sowie Kombinationen aus den genannten Materialien.

Erstaunlicher Weise und für den Fachmann überraschend ist, dass sich der im Walzenspalt rotierende Massewulst nicht mit den zugeführtem Selbstklebemassen vermischt. Zu erwarten gewesen wäre, dass sich die Selbstklebemasse zumindest teilweise vom antiadhäsiv ausgerüsteten Träger löst und mit dem rotierenden Massewulst vermischt.

Direkt nach der Beschichtung mittels Walzenauftrag - bevorzugt nach einem der vorstehend genannten Verfahren - oder Extrusionsdüse ist die Klebemasse nur leicht anvernetzt, aber noch nicht ausreichend vernetzt. Die Vernetzungsreaktion verläuft vorteilhaft auf dem Träger.

Die Reaktion insbesondere mit Isocyanaten verläuft bevorzugt ohne Katalyse. Die Vernetzungsreaktion verläuft auch ohne Wärmezufuhr bei Normalbedingungen (Raumtemperatur) vollständig ab. In der Regel ist nach einer bis zu 14-tägigen, insbesondere einer vier- bis zehntägigen Lagerung die Vernetzungsreaktion mit dem multifunktionalisierten Isocyanat weitestgehend abgeschlossen und die endgültige Kohäsion der Masse erreicht.

Durch die Vernetzung mit Isocyanaten bilden sich Urethangruppen aus, die die Polymerketten verknüpfen. Durch die Verknüpfung erhöhen sich die Kohäsion der Klebemasse und damit auch die Scherfestigkeit. Diese Gruppen sind bekanntermaßen sehr stabil. Dies ermöglicht sehr alterungsstabile und wärmebeständige Selbstklebebänder.

Bei funktionalisierten Acrylatcopolymeren, die keine einpolymerisierte Acrylsäure enthalten, verläuft die Reaktion bevorzugt mit aromatischen und/oder aliphatischen Isocyanaten bei leicht erhöhten Temperaturen.

Bei funktionalisierten Acrylatcopolymeren, die einpolymerisierte Acrylsäure enthalten, ist die Reaktionsgeschwindigkeit schneller. Hier gelingt ein prozessstabiler Prozess bevorzugt mit den langsameren aliphatischen Isocyanaten oder oberflächendeaktivieren Isocyanatemulsionen.

Die physikalischen Eigenschaften des Endproduktes, insbesondere dessen Viskosität, Klebkraft und Anfassklebrigkeit, können durch den Grad der Vernetzung beeinflusst werden, so dass sich durch geeignete Wahl der Reaktionsbedingungen das Endprodukt optimieren lässt. Diverse Faktoren bestimmen das Prozessfenster dieses Verfahrens. Die wichtigsten Einflussgrößen sind Prozess- und Beschichtungstemperatur, Verweilzeit in Compoundierextruder und Beschichtungsaggregat, Vernetzertyp (deaktiviert, aliphatisch, aromatisch), Vernetzerkonzentration, Anteil an Hydroxygruppen im Polymer, Anteil an copolymerisierten Säuregruppen im Polymer sowie das mittlere Molekulargewicht des Polyacrylats.

Im Folgenden werden einige Zusammenhänge bei der Herstellung der erfindungsgemäßen Selbstklebemasse beschrieben, die das Verfahren zur Herstellung optimieren, aber nicht einschränkend für den erfindungsgemäßen Gedanken sind:

Bei gleich bleibender Vernetzerkonzentration führt eine Erhöhung der Prozesstemperatur zu einer verringerten Viskosität, dies verbessert die Beschichtbarkeit der Masse, reduziert jedoch die Verarbeitungszeit. Eine Erhöhung der Verarbeitungszeit erhält man durch Verringerung der Vernetzerkonzentration, Erniedrigung des Molekulargewichts, Verringerung der Konzentration an Hydroxygruppen im Polymer, Verringerung des Säureanteils im Polymer, Verwendung von weniger reaktiven Isocyanaten und Verringerung der Prozesstemperatur. Eine Kohäsionsverbesserung der Masse kann man durch unterschiedliche Wege erhalten. Entweder wird die Vernetzerkonzentration erhöht, was die Verarbeitungszeit reduziert. Man kann bei gleich bleibender Vernetzerkonzentration auch das Molekulargewicht des Polyacrylats erhöhen, was möglicherweise effizienter ist. Je nach gewünschtem Anforderungsprofil der Masse bzw. des Produktes müssen die oben genannten Parameter in geeigneter Weise angepasst werden.

Das mit dem erfindungsgemäßen Verfahren herzustellende Polyacrylat wird insbesondere als Haftklebemasse verwendet, insbesondere als Haftklebemasse für ein Klebeband, wobei die Acrylathaftklebemasse als ein- oder doppelseitiger Film auf einer Trägerfolie vorliegt. Zudem kann das Polyacrylat als viskoelastisches Träger für einseitig oder doppelseitig mit Klebemassen beschichtete Klebebänder verwendet werden. Der viskoelastische Träger bildet dann hauptsächlich die Mittelschicht dreischichtig aufgebauter Klebebänder.

Dieses Verfahren eignet sich auch besonders gut zur Herstellung von dreidimensionalen haftklebrigen oder auch nicht haftklebrigen Formkörpern. Ein besonderer Vorteil dieses Verfahrens ist, dass eine Schichtdickenbegrenzung des zu vernetzenden, auszuformenden Polyacrylats im Gegensatz zu UV- und ESH härtenden Verfahren nicht vorhanden ist. Entsprechend der Wahl des Beschichtungs- oder Ausformungsaggregate lassen sich somit beliebig geformte Gebilde herstellen, die dann unter milden Bedingungen zu gewünschter Festigkeit nachvemetzen können.

Besonders geeignet ist dieses Verfahren auch zur Herstellung besonders dicker Schichten, insbesondere von Haftklebeschichten oder viskoelastischen Acrylatschichten mit einer Dicke oberhalb von 80 $\mu$m. Derartige Schichten sind mit der Lösemitteltechnik schlecht herstellbar (Blasenbildung, sehr langsame Beschichtungsgeschwindigkeit, Kaschieren dünner Schichten übereinander ist aufwendig und birgt Schwachstelle).

Dicke Haftklebeschichten können ungefüllt als Reinacrylat oder harzabgemischt oder mit organischen oder anorganischen Füllstoffen gefüllt vorliegen. Auch nach den bekannten Verfahren offenzellig oder geschlossenzellig geschäumte Schichten sind möglich. Als Methode zur Schäumung ist die Schäumung über komprimierte Gase wie Stickstoff oder

$CO_2$ möglich, oder die Schäumung über Blähmittel wie Hydrazine oder expandierbare Mikroballons. Im Falle der Verwendung von expandierenden Mikroballons wird die Masse bzw. die ausgeformte Schicht vorteilhaft in geeigneter Weise mittels Wärmeeintrag aktiviert werden. Die Schäumung kann im Extruder oder nach der Beschichtung erfolgen. Es kann zweckmäßig sein, die geschäumte Schicht durch geeignete Walzen oder Trennfolien zu glätten sind. Zur Herstellung schäumanaloger Schichten können dem haftklebrigen thermisch vernetzten Acrylatschmelzhaftkleber auch Glasholhlkugeln oder bereits expandierte polymere Mikroballons zugesetzt werden.

Insbesondere können mit diesem Verfahren auch dicke Schichten hergestellt werden, die als Trägerschicht beidseitig mit Haftklebemasse beschichtete Klebebander verwendet werden können, insbesondere bevorzugt gefüllte und geschäumte Schichten, die als Trägerschichten für schaumartige Klebebänder genutzt werden können. Auch bei diesen Schichten ist es sinnvoll, dem Polyacrylat vor dem Zusatz des thermischen Vernetzers Glasvollkugeln, Glashohlkugeln oder expandierende Mikroballons zuzusetzen. Im Falle der Verwendung von expandierenden Mikroballons wird die Masse bzw. die ausgeformte Schicht in geeigneter Weise mittels Wärmeeintrag aktiviert. Die Schäumung kann im Extruder oder nach der Beschichtung erfolgen. Es kann zweckmäßig sein, die geschäumte Schicht durch geeignete Walzen oder Trennfolien oder durch das Zukaschieren einer auf ein Trennmaterial beschichtete Haftklebemassenzu glätten. Zu einer derartigen schaumartigen, viskoelastischen Schicht kann mindestens einseitig eine Haftklebeschicht zukaschiert werden. Bevorzugt wird beidseitig eine Corona-vorbehandelte Polyacrylatschicht zukaschiert. Es können alternativ anders vorbehandelte Klebeschichten, also Haftklebeschichten und/oder hitzeaktivierbare Schichten auf der Basis anderer Polymere als auf Acrylatbasis zu der viskolelastischen Schicht zukaschiert werden. Geeignete Basispolymere sind Klebemassen auf Basis von Naturkautschuk, Synthesekautschuke, Acrylatblockcopolymere, Stryolblockcopolymere, EVA, bestimmte Polyolefine, spezielle Polyurethane, Polyvinylether, und Silikone. Bevorzugt sind jedoch Massen, die keine nennenswerten Anteils an migrierfähigen Bestandteilen haben, die mit dem Polyacrylat so gut verträglich sich, dass in signifikanter Menge in die Acrylatschicht eindiffundieren und dort die Eigenschaften verändern. Statt beidseitig eine Haftklebeschicht zu kaschieren, kann auch mindestens einseitig eine Schmelzklebeschicht oder thermisch aktivierbare Klebschicht verwendet werden. Derartige asymmetrische Klebbänder erlauben das Verkleben kritischer Substrate mit hoher Verklebungsfestigkeit.

Wird die thermisch vernetzte Acrylathotmeltschicht als viskoelastische Trägerschicht verwendet, dann kann der Glasübergangsbereich des Polyacrylats auch oberhalb von +25°C liegen. Je nach Anteil hartmachender Comonomere wie beispielsweise tert.-Butylacrylat, Isobornylacrylat oder Styrol ist ein $T_G$ von bis zu 80 °C möglich.

Ein besonderer Vorteil der thermisch vernetzten Acrylathotmeltschicht ist, dass diese Schichten, ob als viskoelastischer Träger oder als Haftklebemasse genutzt, bei gleicher Oberflächengüte kein Vernetzungsprofil durch die Schicht im Gegensatz zu UV- und ESH-Vemetzten Schichten zeigen. Dadurch lässt sich die Balance zwischen adhäsiven und kohäsiven Eigenschaften durch die Vernetzung ideal für die gesamte Schicht steuern und einstellen. Bei strahlenchemisch vernetzten Schichten ist immer eine Seite oder eine Teilschicht über oder unterdvernetzt.

Weitere geeignete Füllstoffe für eine thermisch vernetzte Acrylathotmeltschicht, die als viskoelastischer Träger verwendet wird sind hydrophile oder hydrophobe Kieselgele wie Aerosile oder Ultrasile, anorganische Füllstoffe wie Kreide, Titandioxid, Calcium- und Bariumsulfat aber auch organisch Füllstoffe wie Polymerkugeln oder Fasern auf Basis von Cellulose, Polyethylen, Polypropylen, Polyamid, Polyacrylonitril, Polyester, Polymethacrylat und/oder Polyacrylat.

Als weitere hartmachende Comonomere können auch Makromomonere in das Polyacrylat einpolymerisiert sein. Besonders geeignet sich Makromomoere wie in EP 1361260 B1 beschrieben, beispielsweise 2-Polystyrolethylmethacrylat mit einem Molekulargewicht Mw von 13000 g/mol. Diese Makromonomer-modifizierten thermisch vernetzten Acrylathotmelt können als Haftklebemasse oder auch als viskoelastischer Träger verwendet werden.

Für bestimmte Anwendungen kann das dann als Zwischenprodukt vorliegende erfindungsgemäße Klebeband durch zusätzliche Bestrahlung mittels aktinischer Strahlung (beispielsweise UV-Licht oder Elektronenstrahlen) weiter den Erfordernissen angepasst bzw. verbessert werden.

**Beispiele**

Die folgenden beispielhaften Experimente sollen die Erfindung näher erläutern, ohne dass durch die Wahl der angegebenen Beispiele die Erfindung unnötig eingeschränkt werden soll.

Testmethoden:

Feststoffgehalt:

Der Feststoffgehalt ist ein Maß für den Anteil an nicht Verdampfbaren in einer Polymerlösung. Er wird gravimetrisch bestimmt, indem man die Lösung einwiegt, dann für 2 Stunden bei 120°C im Trockenschrank die verdampfbaren Anteile abdampft und den Rückstand zurückwiegt.

K-Wert (nach FIKENTSCHER):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normieeung auf die Viskosität des Toluols wird die relative Viskosität erhalten, aus der sich nach FIKENTSCHER der K-Wert errechnen lässt (Polymer 8/1967, 381 ff.)

Gelpermeationschromatographie GPC

Die Bestimmung des mittleren Molekulargewichtes $M_w$ und der Polydisperistät PD erfolgte durch die Firma Polymer Standards Service in Mainz. Als Eluent wurde THF mit 0.1 Vol.-% Trifluoressigsäure eingesetzt. Die Messung erfolgte bei 25°C. Als Vorsäule wurde PSS-SDV, 5 $\mu$, 10' A (= 0,1 $\mu$m), ID 8.0 mm x 50 mm verwendet. Zur Auftrennung wurden die Säulen PSS-SDV, 5 $\mu$, $10^3$ sowie $10^5$ und $10^8$ mit jeweils ID 8.0 mm x 300 mm eingesetzt. Die Probenkonzentration betrug 4 g/l, die Durchflußmenge 1.0 ml pro Minute. Es wurde gegen PMMA-Standards gemessen

180°Klebkrafttest

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg-Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen. Die Meßergebnisse sind in N/cm angegeben und sind gemittelt aus drei Messungen. Alle Messungen wurden bei Raumtemperatur durchgeführt. Analog wurde die Klebkraft auf Polyethylen (PE) bestimmt.

Scherstandzeit

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit 2 kg Anpreßdruck das Klebeband viermal auf den Stahlträger gedrückt. Bei Raumtemperatur wurde ein 1 kg-Gewicht an dem Klebeband befestigt. Die gemessenen Scherstandzeiten sind in Minuten angegeben und entsprechen dem Mittelwert aus drei Messungen. Die Messung wird bei Normalklima (23 °C, 55 % Luftfeuchtigkeit) und bei 70 °C in einem Wärmeschrank durchgeführt.

SAFT - Shear Adhesive Failure Temperatur

Dieser Test dient der Schnellprüfung der Scherfestigkeit von Klebebändern unter Temperaturbelastung. Messprobenpräparation: Die Klebebandprobe (auf 50$\mu$m PET-Folie beschichtete Haftklebemasse) wird auf eine geschliffene, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe beträgt Höhe x Breite = 13 mm x 10 mm, die Probe wird senkrecht aufgehängt, überragt am oberen Rand die Stahl-Prüfplatte um 2 mm und wird bündig mit einem stabilen Klebestreifen verstärkt, der als Auflage für den Wegmessfühler dient.
Messung: Die zu messende Probe wird am unteren Ende mit einem Gewicht von 50 g belastet. Die Stahl-Prüfplatte mit der verklebten Probe wird beginnend bei 25 °C mit einer Rate von 9 °C pro Minute auf die Endtemperatur von 200 °C aufgeheizt. Gemessen wird der Rutschweg der Probe mittels Wegmessfühler in Abhängigkeit von Temperatur und Zeit. Der maximale Rutschweg ist auf 1000$\mu$m festgelegt, bei überschreiten wird der Test abgebrochen. Prüfklima: Raumtemperatur 23 $\pm$ 3 °C, relative Luftfeuchtigkeit 50 $\pm$ 5 %.

Positives Testergebnis:

- Rutschweg nach Erreichen der Endtemperatur(200°C) angegeben in $\mu$m.

Negatives Testergebnis:

- Temperatur bei Erreichen des maximalen Rutschweges (1000$\mu$m) angegeben in °C.

Herstellung der Ausgangspolymere für die Beispiele 1 bis 9

Im Folgenden wird die Präparation der Ausgangspolymere beschrieben. Die untersuchten Polymere werden konventionell über eine freie radikalische Polymerisation in Lösung hergestellt.

HEMA = Hydroxyethylmethacrylat
AIBN = [2,2'-Azobis(2-methylbutyronitril)]
Perkadox 16 = Bis-(4-t-Butylcyclohexyl)peroxidicarbonat

Basispolymer P1

Ein für radikalische Polymerisationen konventioneller Reaktor wurde mit 27 kg 2-Ethylhexylacrylat, 27 kg n-Butylacrylat, 4,8 kg Methylacrylat, 0,6 kg Acrylsäure, 0,6 kg HEMA und 40 kg Aceton/Isopropanol (90:10) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h wurden erneut 30 g AIBN zugegeben und nach 4 h wurde mit 10 kg Aceton/Isopropanol Gemisch verdünnt. Nach 5 sowie nach 7 h wurde jeweils mit 90 g Perkadox 16 nachinitiiert. Nach 22 h Reaktionszeit wurde die Polymerisation abgebrochen und auf Raumtemperatur abgekühlt. Das Polyacrylat hat einen K-Wert von 62, einen Feststoffgehalt von 54,6 %, ein mittleres Molekulargewicht von $Mw = 605000$ g/mol, Polydispersität $(Mw/Mn) = 8,6$

Basispolymer P2

Analog Beispiel B1 wurden 26,1 kg 2-Ethylhexylacrylat 26,1 kg n-Butylacrylat, 4,8 kg Methylacrylat, 1,8 kg Acrylsäure und 1,2 kg HEMA in 40 kg Aceton/Isopropanol (90:10) polymerisiert. Initiiert wurde zweimal mit jeweils 30 g AIBN, zweimal mit jeweils 90 g Perkadox 16 und verdünnt mit 10 kg Aceton/Isopropanol Gemisch (90:10). Nach 22 h Reaktionszeit wurde die Polymerisation abgebrochen und auf Raumtemperatur abgekühlt. Das Polyacrylat hat einen K-Wert von 58, einen Feststoffgehalt von 54,8 %, ein mittleres Molekulargewicht von $Mw = 583000$ g/mol, Polydispersität $(Mw/Mn) = 7,8$

Basispolymer P3

Analog Beispiel B1 wurden 26,4 kg 2-Ethylhexylacrylat, 26,7 kg n-Butylacrylat, 4,8 kg Methylacrylat, 1,8 kg Acrylsäure und 0,3 kg HEMA in 40 kg Aceton/Isopropanol (95:5) polymerisiert. Initiiert wurde zweimal mit jeweils 30 g AIBN, zweimal mit jeweils 90 g Perkadox 16 und verdünnt mit 10 kg Aceton/Isopropanol Gemisch (95:5). Nach 22 h Reaktionszeit wurde die Polymerisation abgebrochen und auf Raumtemperatur abgekühlt. Das Polyacrylat hat einen K-Wert von 72,5, einen Feststoffgehalt von 53,5 %, ein mittleres Molekulargewicht von $Mw = 702000$ g/mol, Polydispersität $(Mw/Mn) = 7,3$

Basispolymer P4

Analog Beispiel B1 wurden 44,0 kg 2-Ethylhexylacrylat, 44,0 kg n-Butylacrylat, 10 kg Methylacrylat, und 2 kg HEMA in 66,66 kg Aceton/Isopropanol (95:5) polymerisiert. Das Polyacrylat hat einen K-Wert von 80, einen Feststoffgehalt von 55,0 %, ein mittleres Molekulargewicht von $Mw = 890000$ g/mol, Polydispersität $(Mw/Mn) = 8,2$

Basispolymer P5

Es wurde analog Beispiel B1 vorgegangen. Zur Polymerisation wurden 27 kg 2-Ethylhexylacrylat, 27,0 kg n-Butylacrylat, 4,8 kg Methylacrylat, 0,6 kg Acrylsäure und 0,6 kg HEMA in 40 kg Aceton/Isopropanol (92,5:7,5) polymerisiert. Initiiert wurde zweimal mit jeweils 30 g AIBN, zweimal mit jeweils 90 g Perkadox 16 und verdünnt mit 10 kg Aceton/Isopropanol Gemisch (92,5:7,5). Nach 22 h Reaktionszeit wurde die Polymerisation abgebrochen und auf Raumtemperatur abgekühlt. Das Polyacrylat hat einen K-Wert von 68, einen Feststoffgehalt von 54,6 % und ein mittleres Molekulargewicht von $Mw = 681000$ g/mol, Polydispersität $(Mw/Mn) = 8,6$

Basispolymer P6

Ein für radikalische Polymerisationen konventioneller Reaktor wurde mit 27 kg 2-Ethylhexylacrylat, 27 kg n-Butylacrylat, 4,8 kg Methylacrylat, 0,6 kg Acrylsäure, 0,6 kg HEMA, 40 g Dithiobenzoesäurebenzylester und 40 kg Aceton befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h wurden erneut 30 g AIBN zugegeben. Nach 4 h verdünnte man mit 5 kg Aceton. Nach 5 und nach 7 h erfolgte eine Zugabe von jeweils 90 g Perkadox 16™ (Fa. Akzo). Nach 22 h Reaktionszeit wurde die Polymerisation abgebrochen und auf Raumtemperatur abgekühlt.

Das Polyacrylat hat einen K-Wert von 52, einen Feststoffgehalt von 55,2 %, ein mittleres Molekulargewicht von Mw = 462000 g/mol, Polydispersität (Mw/Mn) = 2,8.

**Verfahren 1: Aufkonzentration / Herstellung von Schmelzhaftkleber:**

Die mit Hydroxy-Gruppen funktionalisierten Acrylatcopolymere (Basispolymere P1 bis P6) werden mittels BERSTORFF-Einschneckenextruder (Aufkonzentrationsextruder) weitestgehend vom Lösemittel befreit. Exemplarisch sind hier die Parameter der Aufkonzentration des Basispolymeren P1 dargestellt. Die Drehzahl der Schnecke betrug 170 U/min, der Motorstrom 17 A, es wurde ein Durchsatz von 62,3 kg flüssig/h realisiert. Zur Aufkonzentration wurde an 3 verschiedenen Domen ein Vakuum angelegt. Die Unterdrücke betrugen jeweils 340 mbar, 50 mbar und 7 mbar, wobei das geringste Vakuum im ersten Dom angelegt wurde. Die Austrittstemperatur des aufkonzentrierten Hotmelts lag bei 105 °C. Der Feststoffgehalt betrug nach diesem Aufkonzentrationsschritt 99,7%.

**Verfahren 2: Herstellung Harz-modifizierter Schmelzhaftkleber**

Die nach dem oben erläuterten Verfahren 1 hergestellten Acrylatschmelzhaftkleber wurden direkt in einen nachgeschalteten WELDING-Doppelschneckenextruder (WELDING Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über ein Feststoffdosiersystem wurden 30 Gew% des Harzes Dertophene T110 (Hersteller DRT, Frankreich) in Zone 1 zudosiert und homogen eingemischt. Exemplarisch sind hier für die Harzcompoundierung mit dem Basispolymer P1 die Parameter dargelegt Drehzahl betrug 474 U/min, der Motorstrom 44 A, es wurde ein Durchsatz von 31,3 kg/h realisiert. Die Temperaturen der Zonen 1 und 2 betrugen jeweils 100 °C, die Schmelzetemperatur in Zone 1 betrug 112 °C und die Massetemperatur bei Austritt (Zone 3) 90 °C.

**Verfahren 3: Herstellung der erfindungsgemäßen Klebebänder, Abmischung mit dem thermischen Vernetzer und Beschichtung (Beispiele 1 bis 9)**

Die nach den Verfahren 1 - 2 hergestellten Acrylatschmelzhaftkleber wurden in einem Fütterextruder (Einschneckenförderextruder der Firma TROESTER) aufgeschmolzen und mit diesem als Polymerschmelze in einen Doppelschneckenextruder gefördert (Fa. LEISTRITZ, Deutschland, Bez. LSM 30/34. Das Aggregat wird von außen elektrisch beheizt und über verschiedene Gebläse luftgekühlt und ist so konzipiert, dass bei guter Verteilung des Vernetzungssystems in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der jeweiligen Vernetzungssysteme erfolgt mit geeignetem Dosierequipment gegebenenfalls an mehreren Stellen und gegebenenfalls unter Verwendung von Dosierhilfsmitteln in die druckfreien Förderzonen des Doppelschneckenextruders.

Nach Austritt der fertig compoundierten, mit Vernetzer abgemischten Klebmasse aus dem Doppelschneckerextruder (Austritt: Runddüse, 5 mm Durchmesser) erfolgt die Beschichtung direkt mittels nachgeschaltetem 2-Walzenauftragswerk auf eine 50 $\mu$m-Polyester-Folie gemäß dem Beschichtungsverfahren nach Variante A (Fig.2). Wie oben erwähnt, wird die Zeit zwischen Zudosierung des Vernetzungssystems bis zum optisch homogenen Ausformen auf einen Träger als Verarbeitungszeit bezeichnet. Die Verarbeitungszeit ist stark abhängig von Prozesstemperatur, Vernetzertyp und -menge, sowie von der Funktionalisierung der Acrylatmasse mit Carboxy- und Hydroxygruppen und gibt den Zeitraum an, in welcher die mit Vernetzer abgemischte Klebmasse mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze des 2-Walzenauftragswerk wird nicht angetrieben.

In den nachfolgenden Beispielen und in der Tabelle 1 werden die Prozessbedingungen, Dosierverhältnisse und Formulierungen näher erläutert.

**Beispiel B1**

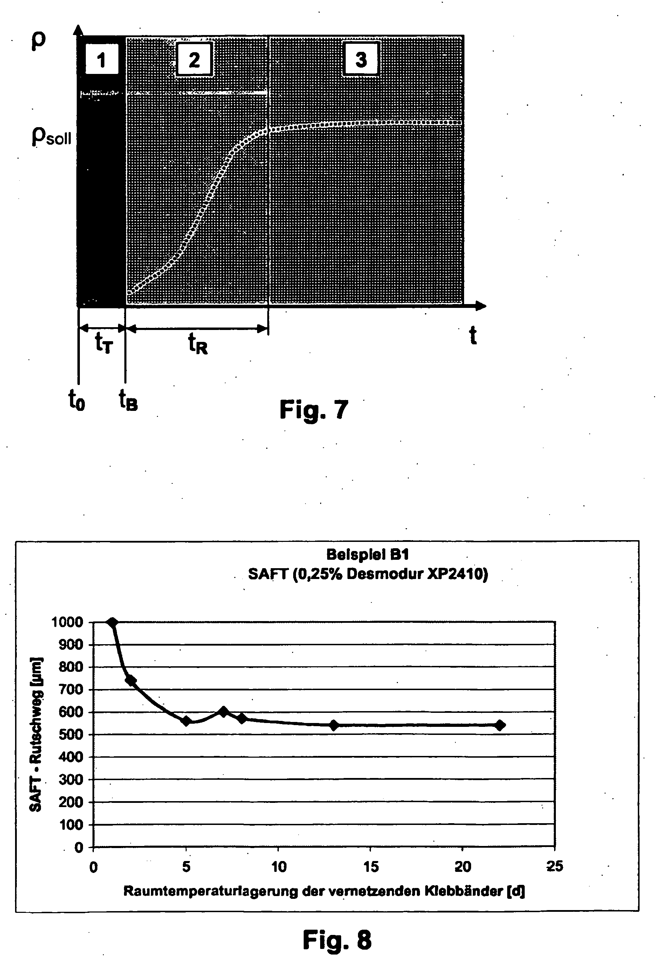

Das Basispolymer P1 wurde gemäß Verfahren 1 aufkonzentiert (Feststoffgehalt 99,7%) und anschließend gemäß Verfahren 3 mit 30 % Harz Dertophene T 110 abgemischt Diese harzmodifizierte Acrylat-Hotmeltmasse wurde gemäß Verfahren 4 mit 0,25 Gew.% (bezogen auf Acrylatcopolymer) des trimerisierten aliphatischen Diisocyanates Desmodur XP 2410 (Fa. BAYER AG, Deutschland) abgemischt. Zur Verbesserung der Dosierfähigkeit wurde das trimerisierte Diisocyanat mit dem flüssigen Phophatester REOFOS 65 (Fa. GREAT LAKES, USA) im Verhältnis 1 zu 3 verdünnt. Die Prozessparameter sind in Tabelle 1 zusammengefasst. Die Verarbeitungszeit des Compounds betrug 9 Minuten bei einer effektiven Massetemperatur von 82 °C nach dem Verlassen des LEISTRITZ-Extruders. Die Beschichtung erfolgt am 2-Walzenauftragswerk bei Walzentemperaturen von 100 °C und einem Masseauftrag von 85 g/m$^2$ auf PET-Folie. Von dem so hergestellten Klebeband wurden SAFT-Messungen in Abhängigkeit von der Lagerungsdauer der Muster bei Raumtemperatur durchgeführt. Nach 5 Tagen Raumtemperaturlagerung ist die Vernetzung der Muster abgeschlossen, der SAFT-Rutschweg erreicht ein stabiles Niveau bei ca. 540 μm. Die Ergebnisse sind grafisch in Fig. 8 geneigt. Weitere klebtechnische Daten des Beispiels 1 sind in Tabelle 2 zusammengefasst.

### Beispiel B2

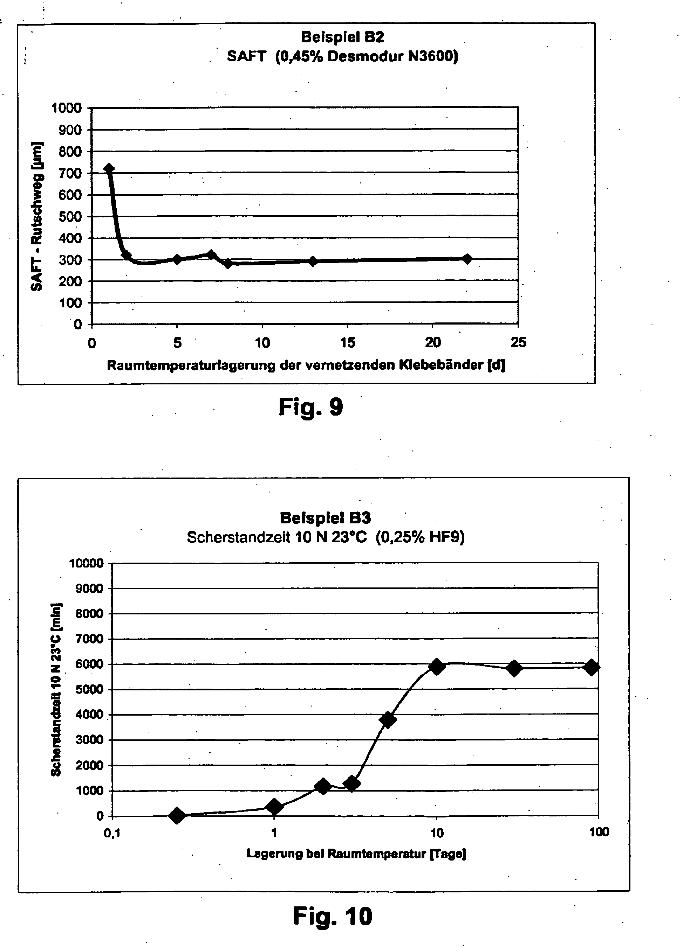

Das gemäß Verfahren 1 aufkonzentrierte und gemäß Verfahren 2 mit 30 % Harz Dertophene T110 abgemischte Basispolymer P1 wurde analog Beispiel B1 mit Vernetzer abgemischt und beschichtet. Zugesetzt wurden 0.45 Gew.% (bezogen auf Acrylatcopolymer) des trimerisierten HDI-Polyisocyanates Desmodur N3600 (BAYER AG, Deutschland) gemäß Verfahren 3. Die Extruderdrehzahl des LEISTRITZ-Doppelschneckenextruders betrug 50 Umdrehungen pro Minute, der Massedurchsatz 13,0 kg/h. Die Verarbeitungszeit betrug 7 min bei einer effektiven Massetemperatur von 85 °C nach dem Verlassen des Extruders. Mittels Walzenauftragswerk wurden mit einem Masseauftrag von 105 g/m$^2$ auf 23 μm PET-Folie beschichtet. Von dem so hergestellten Klebeband wurden SAFT-Messungen in Abhängigkeit von der Lagerungsdauer der Muster bei Raumtemperatur durchgeführt. Nach 5 Tagen Raumtemperaturlagerung ist die Vernetzung der Muster nahezu abgeschlossen, der SAFT-Rutschweg erreicht ein stabiles Niveau bei ca. 540 μm. Nach 5 Tagen Raumtemperaturlagerung ist die Vernetzung abgeschlossen, der SAFT-Rutschweg erreicht ein Plateau (Fig. 9). Zu klebtechnischen Daten siehe Beispiel B2 in Tabelle 2.

### Beispiel B3

Das gemäß Verfahren 1 aufkonzentrierte und gemäß Verfahren 2 mit 30 % Harz Dertophene T110 abgemischte Basispolymer P2 wurde analog Beispiel B1 mit Vernetzer abgemischt und beschichtet. Gemäß Verfahren 3 wurden 0,25 Gew.% (fest auf fest, bezogen auf das Acrylatcopolymer) einer wässrigen Suspension (Feststoffgehalt 34 %) des oberflächlich mit Diisopropylamin deaktivierten mikronisierten IPDI Trimerisats HF9 (BAYER AG, Deutschland) der Acrylat-Hotmeltmasse zugesetzt. Zu Prozessbedingungen siehe Tabelle 1. Anschließend wurde am Walzenauftragswerk mit einem Masseauftrag von 77 g/m$^2$ auf 23 μm PET-Folie beschichtet. Die Verarbeitungszeit betrug 6 min bei einer effektiven Massetemperatur von 78 °C nach dem Verlassen des Compoundier-Extruders. Von dem so hergestellten Klebeband wurde die Scherstandzeit bei Nomalklima (23 °C, 55 % Luftfeuchtigkeit) in Abhängigkeit von der Lagerungsdauer bei Raumtemperatur durchgeführt. Die Schertestwerte steigen innerhalb der ersten 10 Tage auf ca. 2500 min und bleiben dann auf diesem Niveau über die gesamte beobachtete Zeit von 270 Tagen. Die Ergebnisse sind grafisch in Fig. 10 gezeigt. Zu weiteren klebtechnischen Daten siehe Beispiel B3 in Tabelle 2.

### Bespiel B4:

Analog Beispiel B1 wurde das Basispolymer P1 gemäß Verfahren 1 aufkonzentriert, gemäß Verfahren 2 mit 30 Gew% DT 110 abgemischt und gemäß Verfahren 3 mit 0,39 Gew % Desmodur XP 2410 abgemischt und mit einem Masseauftrag von 65 g/m$^2$ auf 23 μm PET Folie beschichtet. Die Prozessbedingungen sind in Tabelle 1 dargestellt Zu klebtechnischen Daten siehe Beispiel B4 in Tabelle 2.

### Beispiel B5:

Analog Beispiel B1 wurde das Basispolymer P3 gemäß Verfahren 1 aufkonzentriert, gemäß Verfahren 2 mit 30 Gew% DT 110 abgemischt und gemäß Verfahren 3 mit 0,40 Gew % Desmodur XP 2410 abgemischt und mit einem Masseauftrag von 85 g/m$^2$ auf 23 μm PET Folie beschichtet. Die Prozessbedingungen sind in Tabelle 1 dargestellt. Zu klebtechnischen Daten siehe Beispiel B5 in Tabelle 2.

### Beispiel B6:

Analog Beispiel B1 wurde das Basispolymer P3 gemäß Verfahren 1 aufkonzentriert und ohne Zusatz von Harzen oder Füllstoffen gemäß Verfahren 3 mit 0,20 Gew % Desmodur XP 2410 abgemischt und mit einem Masseauftrag von 90 g/m$^2$ auf 23 μm PET Folie beschichtet. Die Prozessbedingungen sind in Tabelle 1 dargestellt. Zu klebtechnischen Daten siehe Beispiel B6 in Tabelle 2.

### Beispiel B7:

Analog Beispiel B1 wurde das Basispolymer P4 gemäß Verfahren 1 aufkonzentriert und ohne Zusatz von Harzen oder Füllstoffen gemäß Verfahren 3 mit 0,40 Gew % Desmodur XP 2410 abgemischt und mit einem Masseauftrag von 100 g/m$^2$ auf 23 μm PET Folie beschichtet. Die Prozessbedingungen sind in Tabelle 1 dargestellt. Zu klebtechnischen Daten siehe Beispiel B7 in Tabelle 2.

### Beispiel B8:

Analog Beispiel B1 wurde das Basispolymer P5 gemäß Verfahren 1 aufkonzentriert und in einen WELDING-Doppelschneckenextruder (WELDING Engineers, Orlando, USA) gefördert.
Über Feststoffdosiersysteme wurden jeweils 30 Gew.-% Harz Dertophene T110 und 30 Gew.-% Mikrosöhl-Kreide (MS 40, Fa. Söhlde) in Zone 1 zudosiert und anschließend homogenisiert.
Durch Einbau von 2 Stauelementen wurde die Scherung erhöht. Folgende Parameter wurden eingestellt Drehzahl 460 U/min, Motorstrom 58 A, Durchsatz Polymer 40,0 kg/h, Temperaturen Zone 1 = 110 °C, Temperatur Zone 2 = 100 °C, Schmelzetemperatur in Zone 1 = 154 °C und die Massetemperatur bei Austritt (Zone 3) 134 °C. Zu dieser Masse wurden gemäß Verfahren 3 0,40 Gew.-% Desmodur XP2410 zugemischt und mittels 2-Walzenverfahren mit 85 g/m$^2$ auf 23 μm PET Folie beschichtet. Die Prozessbedingungen sind in Tabelle 1 dargestellt. Zu klebtechnischen Daten siehe Beispiel B8 in Tabelle 2.

### Beispiel B9:

Analog Beispiel B1 wurde das Basispolymer P6 gemäß Verfahren 1 aufkonzentriert, gemäß Verfahren 2 mit 30 Gew.-% DT 110 abgemischt und gemäß Verfahren 3 mit 0,50 Gew.-% Desmodur XP 2410 versetzt und mit einem Masseauftrag von 100 g/m$^2$ auf 23 μm PET Folie beschichtet. Die Prozessbedingungen sind in Tabelle 1 dargestellt. Zu klebtechnischen Daten siehe Beispiel B9 in Tabelle 2.

Das erfindungsgemäße Verfahren bietet überraschenderweise eine hervorragende Lösung der eingangs gestellten Aufgabe an. So können durch die Minimierung des Verarbeitungsweges - Zugabe des Vernetzers im Extruder, während einer guten Durchmischung der Masse bereits der Transport bis zur Beschichtungseinheit und dann direkt anschließend eine optimierte Beschichtungsweise, insbesondere durch die vorgestellten Kalander - gut beschichtbare Acrylatschmelzhaftkleber hergestellt werden, deren Beschichtungsbilder sehr gleichmäßig und homogen sind. Durch die vorteilhafte thermische Vernetzung, die vorteilhaft direkt auf dem Trägermaterial stattfindet, ist es zudem möglich, Schichten anzubieten, die durch die Schichtdicke hindurch kein Vernetzungsprofil aufweisen. Bei keiner anderen mit einem thermischen Vernetzer versehenen Masse konnten zuvor derart positive Verarbeitungseigenschaften festgestellt werden, und keine anderen aus dem Stand der Technik bekannten Massen ließen solche guten Verarbeitungseigenschaften bei Variation des Vernetzers erwarten.

Für den Fachmann völlig überraschend ist dabei die Beschichtbarkeit der Hotmelt-Klebmasse nach Zugabe und Einmischung des Isocyanat-Vernetzungssystems in die Polyacrylat-Klebmasse bei den im Compoundieraggregat herrschenden Temperaturen zwischen 60 °C und 120 °C, vorzugsweise zwischen 70 °C und 100 °C. Unter Beschichtbarkeit wird in diesem Zusammenhang die Eignung zum Ausformen der mit Vernetzer abgemischten Klebmasse in dünne Schichten und zum Aufbringen auf ein bahnförmiges Trägermaterial mittels Beschichtungsdüse oder Walzenbeschichtungswerk verstanden. Zu erwarten war eine Vernetzung bzw. Vergelung der Klebmasse, so dass eine nachfolgende Beschichtung nicht mehr möglich gewesen wäre. Tatsächlich können die beschriebenen Klebmassen aber innerhalb eines gewissen Zeitraumes nach der Vernetzerdosierung und Compoundierung beschichtet werden. Die Verarbeitungszeit ist stark abhängig von Molekulargewicht und Hydroxy-Funktionalisierung der Polyacrylat-Klebmasse, sowie von Typ und Menge des verwendeten Vemetzungssystem und den herrschende Prozessbedingungen wie z.B. Massetemperatur und geometrische Beschaffenheit des Compoundieraggregates.

Gemäß des bekannten Standes der Technik hätte der Fachmann eine sofortige Reaktion der Isocyanate mit den im Polyacrylat enthaltenen OH-Gruppen mit resultierender Unbeschichtbarkeit der anvernetzten Masse erwartet. Zur Vermeidung hätte er blockierte Isocyanate bei extrem hohen Temperaturen mit dem Nachteil der in der Klebmasse verbleibenden und störenden Blockierungsmittel einsetzen müssen.

Ebenfalls war es für den Fachmann nicht zu erwarten, dass eine effektive Nachvernetzung der Klebmassen bei Raumtemperatur ohne kontrollierten Einflusses aktinischer Strahlung möglich war, signifikant zu zeigen durch SAFT und SSZ-Stahl 10N.

Wie den Daten der Tabelle 2 zu entnehmen ist, lassen sich mit diesem Verfahren sehr leistungsstarke Klebmassen herstellen. Die Adhäsionswerte sind insbesondere bei den harzmodifizierten Massen sehr gut, die Kohäsion - gemessen durch die Scherstandzeiten bei 23 und 70°C - ist ebenfalls gut. Für den Fachmann überraschend gut ist die Wärmebeständigkeit gemessen durch den SAFT Test. In jedem Fall ist die Verklebung bis zu einer Temperatur von 200 °C stabil.

Die Vorteile des erfindungsgemäßen Verfahrens können zusammenfassend durch ein Verlaufsprofil, wie es in Fig. 7 (grafische Darstellung: Vernetzungsgrad $\rho$ gegen die Zeit t) dargestellt ist, veranschaulicht wird:

- eine während der Beschichtung nicht vernetzte Masse, die sich mit einem homogenen Strichbild beschichten lässt (Bereich [1], gekennzeichnet durch die Verarbeitungszeit $t_T$, also die Zeit zwischen der Vernetzerzugabe und der Beschichtung),
- eine hinreichende (selbst ablaufende) Vernetzung der Masse innerhalb weniger Tage bis zu einem Vernetzungsgrad ($\rho_{soll}$), der garantiert, dass das Produkt den durch die Anwendungsgebiete der Haftklebemasse gestellten Anforderungen hinsichtlich Temperaturstabilität genügt (Bereich [2], gekennzeichnet durch die Reifezeit $t_R$, also die Zeit zwischen der Beschichtung und dem Erreichen des gewünschten Vernetzungsgrades $\rho_{soll}$),
- selbst eintretende Beendigung der Vernetzungsreaktion nach dem Erreichen des gewünschten Vernetzungsgrades $\rho_{soll}$, so dass es nicht zu einer Übervernetzung der Klebemasse kommt (Bereich [3]).

$t_0$ bezeichnet den Zeitpunkt der Vernetzerzugabe, $t_B$ den Zeitpunkt der Beschichtung.

Das erfindungsgemäße Verfahren ermöglicht es somit erstmals, die Nachteile des Standes der Technik zu vermeiden.

Das erfindungsgemäß Klebeband kann in vorteilhafter Weise auch als stripfähiges Klebeband verwendet werden, insbesondere derart, dass es durch Zug im wesentlichen in der Verklebungsebene rückstandsfrei wiederabgelöst werden kann.

Tabelle 1: Die wichtigsten Parameter der Einarbeitung des Vernetzers in den AC-Schmelzhaftkleber nach Verfahren 3, Musterherstellung

| Beispiel | Basispolymer | | Compoundieren Verfahren 2 | Vernetzereinarbeitung und Beschichtung nach Verfahren 3 | | | | | | | | | |
|---|---|---|---|---|---|---|---|---|---|---|---|---|---|
| | Polymer | K-Wert | Anteil Zuschlagstoffe [Gew.%] | Vernetzer – Typ und Menge [% Vernetzer auf Polymer] | Masse-durch-satz DSE [kg/h] | Dreh-zahl DSE [1/min] | Soll-tempe-ratur DSE [°C] | Strom-auf-nahme DSE [A] | Druck Ausgang DSE [bar] | Masse-temperatur nach DSE [°C] | Beschichtungs-temperatur Rakelwalze / Beschichtungs-walze [°C] | Verar-bei-tungs-zeit [min] | Masse-auftrag [g/m²] |
| B 1 | P 1 | 62 | 30 % DT110 | 0,25% Desmodur XP2410 | 12,5 | 50 | 80 | 8,5 | 13 | 82 | 100/100 | 9 | 85 |
| B 2 | P 1 | 62 | 30 % DT110 | 0,45% Desmodur N3600 | 13,0 | 50 | 80 | 8,5 | 14 | 85 | 100/80 | 7 | 105 |
| B 3 | P 2 | 58 | 30% DT110 | 0,25% HF9 | 12 | 50 | 50 | 14,5 | 27 | 78 | 100/100 | 6 | 77 |
| B 4 | P 1 | 62 | 30% DT110 | 0,39% Desmodur XP2410 | 12,5 | 50 | 80 | 8,5 | 14 | 83 | 100/80 | 9 | 65 |
| B 5 | P 3 | 72,5 | 30% DT110 | 0,40% Desmodur XP2410 | 12,0 | 100 | 80 | 16,0 | 30 | 98 | 100/100 | 5 | 85 |
| B 6 | P 3 | 72,5 | - | 0,20 % Desmodur XP2410 | 10,0 | 100 | 100 | 18,0 | 35 | 107 | 100/100 | 3 | 90 |
| B 7 | P 4 | 80 | - | 0,40% Desmodur XP2410 | 12,5 | 100 | 70 | 14 | 20 | 86 | 100/100 | 10 | 100 |
| B 8 | P 5 | 68 | 30%DT110 und 30% Mikrosöhl | 0,40% Desmodur XP 2410 | 13,0 | 150 | 70 | 12,5 | 15 | 103 | 100/100 | 8 | 85 |
| B 9 | P 6 | 52 | 30 % DT 110 | 0,5% Desmodur XP 2410 | 14 | 100 | 70 | 11,5 | 11 | 83 | 100/100 | 20 | 100 |

DSE = Doppelschneckenextruder

EP 1 791 922 B1

Tabelle 2: Die wichtigsten klebtechnischen Eigenschaften der Beispiele 1 - 9

**Patentansprüche**

1. Verfahren zur Herstellung eines Klebebandes mit ein- oder beidseitiger vernetzter Acrylatschmelzhaftkleber-Schicht, bei welchem in der Schmelze zu einem Polyacrylatcopolymer ("Polyacrylat") auf Basis von Acrylsäureestern und/ oder Methacrylsäureestern ein Vernetzer zugesetzt wird, das mit dem Vernetzer versehene Polyacrylat zu einer Beschichtungseinheit gefördert wird und dort auf eine bahnförmige Schicht eines weiteren Materials aufgebracht wird und nach der Aufbringung homogen vernetzt wird,
**dadurch gekennzeichnet, dass**

   - der Vernetzer ein thermischer Vernetzer ist,
   - ein Teil der Acrylsäureester und/oder Methacrylsäureester primäre Hydroxygruppen enthält und
   - der Vernetzer in zumindest einem kontinuierlich arbeitenden Compoundierungsaggregat zu dem Polyacrylat gegeben wird.

2. Verfahren nach Anspruch 1, **dadurch gekennzeichnet, dass** der thermische Vernetzer in einem Extruder zugesetzt wird.

3. Verfahren nach Anspruch 1 oder 2, **dadurch gekennzeichnet, dass** der thermische Vernetzer ein Isocyanat ist.

4. Verfahren nach einem der vorangehenden Ansprüche, **dadurch gekennzeichnet, dass** das weitere Material ein Trägermaterial ist.

5. Verfahren nach einem der vorangehenden Ansprüche, **dadurch gekennzeichnet, dass** das weitere Material eine Klebmasse ist, insbesondere eine vernetzte Klebmasse.

6. Verfahren nach Anspruch 3, **dadurch gekennzeichnet, dass** der thermische Vernetzer ein trimerisiertes Isocyanat ist.

7. Verfahren nach Anspruch 6, **dadurch gekennzeichnet, dass** die trimerisierten Isocyanate aliphatische oder mit Aminen deaktivierte Isocyanate sind.

8. Verfahren nach Anspruch 6 oder 7, **dadurch gekennzeichnet, dass** die Temperatur des Polyacrylats bei Zugabe des trimerisierten Isocyanates zwischen 60 °C und 120 °C, bevorzugt zwischen 70 °C und 100 °C, beträgt.

9. Verfahren nach zumindest einem der vorangehenden Ansprüche, **dadurch gekennzeichnet, dass** der Restmonomergehalt im Polyacrylats bei Zugabe des Vernetzers nicht mehr als 1 Gew.%, bezogen auf das Polymere, beträgt.

10. Verfahren nach zumindest einem der vorangehenden Ansprüche, **dadurch gekennzeichnet, dass** der Anteil der primäre Hydroxygruppen enthaltenden Acrylsäureester und/oder Methacrylsäureester bis zu 25 Gew.- %, bezogen auf das Polyacrylat, beträgt.

11. Verfahren nach zumindest einem der vorangehenden Ansprüche, **dadurch gekennzeichnet, dass** die Beschichtungseinheit ein Mehrwalzenbeschichtungskalander ist, der insbesondere zwei bis vier Walzen aufweist.

12. Verfahren nach Anspruch 10, **dadurch gekennzeichnet, dass** zumindest eine der Walzen mit einer anti-adhäsiv ausgerüsteten Walzenoberfläche versehen ist.

13. Verfahren nach Anspruch 12, **dadurch gekennzeichnet, dass** die anti-adhäsiv ausgerüstete Walzenoberfläche aus einem Stahl-Keramik-Silikon-Verbundwerkstoff besteht.

14. Verfahren nach einem der Ansprüche 12 oder 13, **dadurch gekennzeichnet, dass** das Polyacrylat auf die folgende Eduktmischung zurückgeführt werden kann:

a1 Acrylsäureester und/oder Methacrylsäureester der allgemeinen Formel

$$CH_2 = C(R^I)(COOR^{II})$$

wobei $R^I$ = H oder $CH_3$
$R^{II}$ = Alkylkette mit 1 bis 20 Kohlenstoffatomen,

mit einem Anteil von 65 bis 99 Gew.-%;
a2 Acrylate und/oder Methacrylate, deren Alkoholkomponente zumindest eine primäre Hydroxyl-Gruppe enthält, und/oder mit Acrylaten copolymerisierbare Vinylverbindungen, die zumindest eine primäre Hydroxyl-Gruppe enthalten, mit einem Anteil von 1 bis 20 Gew.-%,
a3 und, sofern sich die Anteile von a1) und a2) nicht zu 100 Gew.-% addieren, olefinisch ungesättigte copolymerisierbare Monomere mit funktionellen Gruppen,
mit einem Anteil von 0 bis 15 Gew.-%.

## Claims

1. Process for producing an adhesive tape having a crosslinked layer of acrylate hotmelt pressure-sensitive adhesive on one or both sides, which involves adding in the melt, to a polyacrylate copolymer ("polyacrylate") based on acrylic esters and/or methacrylic esters, a crosslinker, conveying the polyacrylate provided with the crosslinker to a coating unit, and applying it there to a web-form layer of a further material, and, following application, carrying out homogeneous crosslinking, **characterized in that**

   - the crosslinker is a thermal crosslinker,
   - some of the acrylic esters and/or methacrylic esters contain primary hydroxyl groups, and
   - the crosslinker is added to the polyacrylate in at least one continuously operating compounding assembly.

2. Process according to Claim 1, **characterized in that** the thermal crosslinker is added in an extruder.

3. Process according to Claim 1 or 2, **characterized in that** the thermal crosslinker is an isocyanate.

4. Process according to any one of the preceding claims, **characterized in that** the further material is a backing material.

5. Process according to any one of the preceding claims, **characterized in that** the further material is an adhesive, more particularly a crosslinked adhesive.

6. Process according to Claim 3, **characterized in that** the thermal crosslinker is a trimerized isocyanate.

7. Process according to Claim 6, **characterized in that** the trimerized isocyanates are aliphatic isocyanates or isocyanates deactivated with amines.

8. Process according to Claim 6 or 7, **characterized in that** the temperature of the polyacrylate when the trimerized isocyanate is added is between 60°C and 120°C, preferably between 70°C and 100°C.

9. Process according to at least one of the preceding claims, **characterized in that** the residual monomer content in the polyacrylate when the crosslinker is added is not more than 1% by weight, based on the polymer.

10. Process according to at least one of the preceding claims, **characterized in that** the fraction of the acrylic esters and/or methacrylic esters containing primary hydroxyl groups is up to 25% by weight, based on the polyacrylate.

11. Process according to at least one of the preceding claims, **characterized in that** the coating unit is a multi-roll coating calender which more particularly has two to four rolls.

12. Process according to Claim 10, **characterized in that** at least one of the rolls is provided with an anti-adhesively treated roll surface.

13. Process according to Claim 12, **characterized in that** the anti-adhesively treated roll surface is composed of a composite steel-ceramic-silicone material.

14. Process according to either of Claims 12 or 13, **characterized in that** the polyacrylate can be traced back to the following mixture of reactants:

a1) acrylic and/or methacrylic esters of the general formula

$$CH_2 = C\,(R^I)\,(COOR^{II})$$

where $R^I$ = H or $CH_3$ and $R^{II}$ is an alkyl chain having 1 to 20 carbon atoms, with a fraction of from 65% to 99% by weight,
a2) acrylates and/or methacrylates whose alcohol component contains at least one primary hydroxyl group, and/or vinyl compounds which are copolymerizable with acrylates and contain at least one primary hydroxyl group, with a fraction of from 1% to 20% by weight,
a3) and, if the fractions of a1) and a2) do not add up to 100% by weight, olefinically unsaturated copolymerizable monomers containing functional groups, with a fraction of from 0% to 15% by weight.

**Revendications**

1. Procédé de réalisation d'une bande adhésive présentant une couche auto-adhésive en masse fondue d'acrylate, réticulée, monoface ou double face, dans lequel on ajoute, en masse fondue, à un copolymère de polyacrylate ("polyacrylate") à base d'esters de l'acide acrylique et/ou d'esters de l'acide méthacrylique, un réticulant, le polyacrylate pourvu du réticulant est transporté vers une unité de revêtement et y est appliqué sur une couche en forme de bande d'un autre matériau et réticulé après l'application, de manière homogène, **caractérisé en ce que**

- le réticulant est un réticulant thermique,
- une partie de l'ester d'acide acrylique et/ou de l'ester d'acide méthacrylique contient des groupes hydroxy primaires et
- le réticulant est ajouté dans au moins un appareil de compoundage fonctionnant en continu au polyacrylate.

2. Procédé selon la revendication 1, **caractérisé en ce que** le réticulant thermique est ajouté dans une extrudeuse.

3. Procédé selon la revendication 1 ou 2,
**caractérisé en ce que** le réticulant thermique est un isocyanate.

4. Procédé selon l'une quelconque des revendications précédentes, **caractérisé en ce que** l'autre matériau est un matériau support.

5. Procédé selon l'une quelconque des revendications précédentes, **caractérisé en ce que** l'autre matériau est une masse adhésive, en particulier une masse adhésive réticulée.

6. Procédé selon la revendication 3, **caractérisé en ce que** le réticulant thermique est un isocyanate trimérisé.

7. Procédé selon la revendication 6, **caractérisé en ce que** les isocyanates trimérisés sont des isocyanates aliphatiques ou désactivés avec des amines.

8. Procédé selon la revendication 6 ou 7,
**caractérisé en ce que** la température du polyacrylate lors de l'addition de l'isocyanate trimérisé est située entre 60°C et 120°C, de préférence entre 70°C et 100°C.

9. Procédé selon au moins l'une quelconque des revendications précédentes, **caractérisé en ce que** la teneur en monomères résiduels lors de l'addition du réticulant n'est pas supérieure à 1% en poids, par rapport aux polymères.

10. Procédé selon au moins l'une quelconque des revendications précédentes, **caractérisé en ce que** la proportion d'esters de l'acide acrylique et/ou d'esters de l'acide méthacrylique contenant des groupes hydroxy primaires est de jusqu'à 25% en poids par rapport au polyacrylate.

11. Procédé selon au moins l'une quelconque des revendications précédentes, **caractérisé en ce que** l'unité de revêtement est une calandreuse de revêtement à plusieurs cylindres, qui présente en particulier deux à quatre cylindres.

12. Procédé selon la revendication 10, **caractérisé en ce qu'**au moins un des cylindres est pourvu d'une surface de cylindre apprêtée de manière antiadhésive.

13. Procédé selon la revendication 12, **caractérisé en ce que** la surface de cylindre apprêtée de manière antiadhésive est constituée par un matériau composite acier-céramique-silicone.

14. Procédé selon l'une quelconque des revendications 12 ou 13, **caractérisé en ce que** le polyacrylate peut être attribué au mélange de produits de départ suivants :

a1) des esters de l'acide acrylique et/ou de l'acide méthacrylique de formule générale

$$CH_2 = C\,(R^I)(COOR^{II})$$

où $R^I$ = H ou $CH_3$
$R^{II}$ = une chaîne alkyle comprenant 1 à 20 atomes de carbone,

en une proportion de 65 à 99% en poids ;
a2) des acrylates et/ou des méthacrylates, dont le composant alcool contient au moins un groupe hydroxyle primaire et/ou des composés de vinyle copolymérisables avec des acrylates, qui contiennent au moins un groupe hydroxyle primaire, en une proportion de 1 à 20% en poids,
a3) et, pour autant que les proportions de a1) et a2) ne s'ajoutent pas à 100% en poids, des monomères copolymérisables oléfiniquement insaturés avec des groupes fonctionnels,

en une proportion de 0 à 15% en poids.

EP 1 791 922 B1

Fig. 1

**Fig. 2**

**Fig. 3**

**Fig. 4**

**Fig. 5**

EP 1 791 922 B1

Fig. 6

Fig. 7

**Beispiel B1**
**SAFT (0,25% Desmodur XP2410)**

Fig. 8

**Beispiel B2**
**SAFT (0,45% Desmodur N3600)**

**Fig. 9**

**Beispiel B3**
**Scherstandzeit 10 N 23°C (0,25% HF9)**

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2131059 A1
- JP 05017726 B
- EP 1127907 A2
- EP 0752435 A1
- US 4524104 A
- US 6765078 B2
- DE 10036901 A1
- US 20040092685 A1
- EP 0824111 A1

- EP 826698 A1
- EP 824110 A1
- EP 841346 A1
- EP 850957 A1
- US 5945491 A
- US 5854364 A
- US 5789487 A
- EP 1361260 B1

**In der Beschreibung aufgeführte Nicht-Patentliteratur**

- **DONATAS SATAS.** Handbook of Pressure Sensitive Adhesive Technology. van Nostrand, 1989, 444-514

- **T.G. FOX.** *Bull. Am. Phys. Soc.,* 1956, vol. 1, 123